(19) Europäisches Patentamt
European Patent Office
Office européen des brevets

(11) **EP 3 076 617 A1**

(12) **EUROPEAN PATENT APPLICATION**

(43) Date of publication:
**05.10.2016 Bulletin 2016/40**

(51) Int Cl.:
***H04L 12/825*** (2013.01)  ***H04L 1/00*** (2006.01)

(21) Application number: **15164051.3**

(22) Date of filing: **17.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **31.03.2015 EP 15305468**

(71) Applicant: **ALCATEL LUCENT**
**92100 Boulogne-Billancourt (FR)**

(72) Inventors:
• **Hermsmeyer, Christian**
**90411 Nuernberg (DE)**
• **Meyer, Gerhard**
**90411 Nuernberg (DE)**

(74) Representative: **Hofmann, Dirk**
**Alcatel-Lucent Deutschland AG**
**Intellectual Property Business Group**
**Lorenzstrasse 10**
**70435 Stuttgart (DE)**

(54) **METHOD FOR MAXIMIZING A PAYLOAD DATA RATE ON A COMMUNICATION LINK AND LINE CARD THEREOF**

(57)    The embodiments of the invention relate to a method for maximizing a payload data rate on a communication link (CL). The method contains determining a current transmission capacity of the communication link (CL) based on state information (CP-INFO, OP-INFO, E-INFO) about at least one current operating condition of the communication link (CL). The method further contains adapting based on the current transmission capacity the payload data rate and a forward error correction data rate for payload data of the payload data rate by maximizing the payload data rate. The embodiments of the invention further relate to a line card (LC) for maximizing a payload data rate on a communication link (CL). The line card (LC) contains a control unit (CU) which is configured to determine a current transmission capacity of the communication link (CL) based on state information (CP-INFO, OP-INFO, E-INFO) about at least one current operating condition of the communication link (CL). The control unit (CU) is further configured to adapt based on the current transmission capacity the payload data rate and a forward error correction data rate for payload data of the payload data rate by maximizing the payload data rate.

*FIG. 4*

**Description**

**FIELD OF THE INVENTION**

The present invention relates to optimizing payload data transmissions via a communication link, more particularly but not exclusively, to an adaptation of a frame format for transmitting data transport signals via an optical communication link.

**BACKGROUND OF THE INVENTION**

This section introduces aspects that may be helpful in facilitating a better understanding of the invention. Accordingly, the statements of this section are to be read in this light and are not to be understood as admission about what is in the prior art.

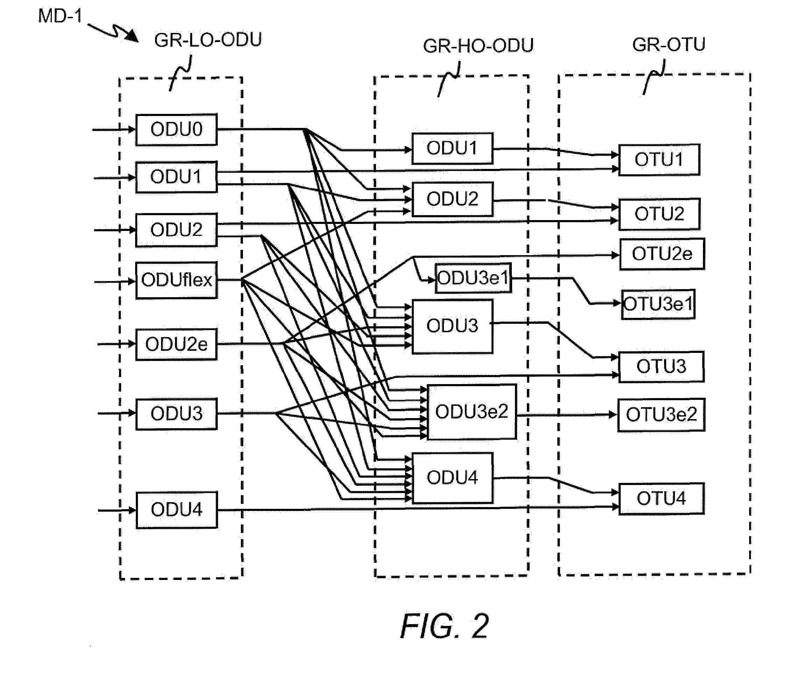

Optical transport networks based on signal structures according to the ITU-T standard G.709 (ITU-T = International Telecommunications Union - Telecommunication Standardization Sector) are today's basis for long haul data transmission, due to their ability to provide FEC signal structures (FEC = Forward Error Correction) that can enhance a transmission range by utilizing error correction. Driven by upcoming higher bandwidth data rates which have the need for more complex line coding schemes and more efficient FECs, driving technology closer to economic implementation limits, there is a need to enhance optical networking with more flexibility such as variable size transport units. Every time a new line rate is introduced, an existing complex mapping substructure is maintained (see Figure 2), that defines transitions/mappings between client/payload structures and server/transport structures for backward-and forward-compatibility. The mapping substructure needs to be enhanced for higher data rates with growing implementation challenges and operational complexity.

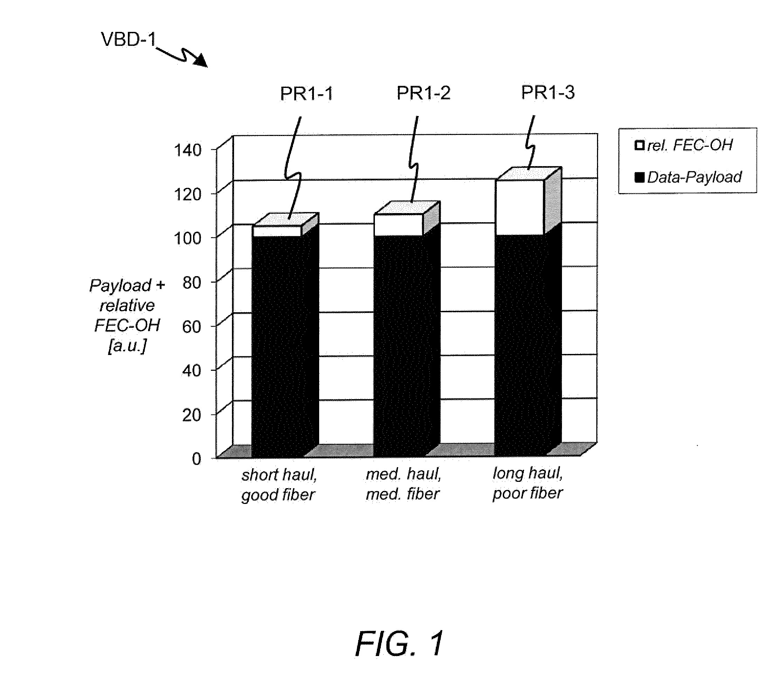

Figure 1 shows schematically a state of the art vertical bar diagram VBD-1 for different sizes of optical data transport units when transmitted either via different distances on optical backhaul links or via optical backhaul links having optical fibers of different transmission quality. The vertical scale of the vertical bar diagram VBD-1 shows a size of the optical data transport units in arbitrary units. An optical data transport unit contains a payload section for user data and a FEC-OH section (FEC-OH: OverHead data for FEC) for FEC data. Three pillars PR1, PR2, PR3 are shown with a black part for the payload section of the optical data transport unit and a white part for the FEC-OH section of the optical data transport unit.

According to one alternative, the three pillars PR1, PR2, PR3 represent from the left side to the right side a first optical backhaul link with a first length below a first predefined length, a second optical backhaul link with a second length between the first predefined length and a second predefined length larger than the first predefined length and a third optical backhaul link with a third length above the predefined second length. In such a case, optical fibers of the first optical backhaul link, the second optical backhaul link and the third optical backhaul link may have a same transmission quality. Due to an increasing length of the optical backhaul links a larger amount of the FEC data needs to be transmitted for a fixed amount of payload data so that a receiver line card of the payload data is able to recover error-free the payload data.

Alternatively, the three pillars PR1, PR2, PR3 may represent from the left side to the right side a further first optical backhaul link with a first transmission quality above a first predefined transmission quality ("good fiber"), a further second optical backhaul link with a second transmission quality between the first predefined transmission quality and a second predefined transmission smaller than the first predefined transmission quality ("medium fiber") and a further third optical backhaul link with a third transmission quality below the predefined second transmission quality ("poor fiber"). In such a case, the further first optical backhaul link, the further second optical backhaul link and the further third optical backhaul link may have a same transmission length. Due to a decreasing transmission quality of the optical backhaul links a larger amount of the FEC data needs to be transmitted for a fixed amount of payload data so that the receiver line card of the payload data is able to recover error-free the payload data.

Usually, line cards do implement different FEC versions such as RS-FEC (RS-FEC = Reed-Solomon Forward Error Correction) or enhanced FEC (see ITU-T standard G.709 Amendment I, which defines algorithms to be used and position/usage of overhead bytes for transport of error correction information) but due to resource constraints and complexity of integrated components, there usually exists one fixed payload data rate and one or two FEC data rates of the provided FEC versions, that together form one or two fixed overall data rates.. In addition, new and stronger FECs are being developed which require even more transmission bandwidth to be used for FEC-overhead transport such as SD-FEC (SD-FEC = Soft Decision Forward Error Correction) which allocates roughly 27 % overhead in relation to an amount of payload data in comparison to a 7 % overhead which is used for older FEC versions.

Per present practice, optical line data rates and FECs are calculated and engineered to the worst case theoretical values of an optical fiber and take into account the lifetime deterioration of transmission performance.

For next generation of optical line data rates, variable size containers such as ODUflex have been standardized (e.g. by ITU-T study groups). ITU-T has defined in ITU-T Recommendation G.709/Y.1331 (02/12) various OTUs (OTU = Optical channel Transport Unit) and various ODUs (ODU = Optical channel Data Unit) for each emerging client data rate such as 1 Gigabit Ethernet. Figure 2 shows a mapping diagram MD-1 with a first group GR-LO-ODU of low order ODUs, a second group GR-HO-ODU of high order ODUs and a third group GR-OTU of OTUs. A specific optical line data rate such as a 1 Gigabit Ethernet data rate is mapped into a corresponding low-order ODU of the first group GR-LO-ODU of low order ODUs such as an ODU0 optical channel data unit. The ODUs of the first group GR-LO-ODU of low order ODUs are either mapped to a corresponding high-order ODU of the second group GR-HO-ODU of high order ODUs such as two ODU0 optical channel data units being mapped to an ODU1 optical channel data unit or is directly mapped to a corresponding OTU of the third group GR-OTU of OTUs such as an ODU2 optical channel data unit being mapped to an OTU2 optical channel transport unit. The ODUs of the second group GR-HO-ODU of high order ODUs are further mapped to a corresponding OTU of the third group GR-OTU of OTUs. Such a mapping between the ODUs of the first group GR-LO-ODU of low order ODUs, the ODUs of the second group GR-HO-ODU of high order ODUs and the OTUs of the third group GR-OTU of OTUs is quite complex and allows only a coarse transmission bandwidth granularity.

OTN line cards (OTN = Optical Transport Network) typically offer a fixed data rate that cannot be adapted to a variable payload. Different FEC types and overhead sizes can be added to an ODUk (ODUk = Optical Channel Data Unit-k) to form an OTU with a different line rate when specified in standards. Therefore, existing OTN line cards provide only a discrete variability of the payload size given by the sizes of the OTUs of the third group GR-OTU of OTUs.

Also the PHY interfaces (PHY = Physical layer) for Ethernet, which are standardized by IEEE (IEEE = Institute of Electrical and Electronics Engineers), provide only a discrete evolution of available data rates (e.g. 10BASE, 100BASE, 1GBASE, 10GBASE, 100GBASE).

In summary, in present optical transport networks BOL margins (BOL = Begin Of Life) are wasted due to EOL design constraints (EOL = End Of Life). Gains in transmission modes due to higher modulation modes, advantages that could be gained when optimizing spectral efficiency in DWDM networks (DWDM = Dense wavelength division multiplexing), e.g. by the use of flexible-grid modulation architectures for short reach transmission, or the potential of high-quality links cannot be exploited by currently available optical data transport signals. Even if the hardware and optical components of existing communication links are capable of supporting different line rates such as 130 Gbit/s and 110 Gbit/s, the payload data rate cannot be changed and the headroom that is available in certain network applications cannot be exploited.

## SUMMARY

Objects of the embodiments of the invention are to improve and increase a utilization of data capacity of optical transmission lines, to decrease a possibility for congestion on the optical transmission lines and thereby to increase user perception, to decrease CAPEX (CAPEX = CAPital Expenditure) when building an OTN and to decrease OPEX (OPEX = Operational expenditure) when operating an OTN.

The objects are achieved by a method for maximizing a payload data rate on a communication link. The method contains the step of determining a current transmission capacity of the communication link based on state information about at least one current operating condition of the communication link. The method further contains adapting based on the current transmission capacity the payload data rate and a forward error correction data rate for payload data of the payload data rate by maximizing the payload data rate.

The objects are further achieved by a computer program having a program code for performing the method for maximizing the payload data rate on the communication link, when the computer program is executed on at least one computer or at least one processor.

The objects are even further achieved by a line card for maximizing a payload data rate on a communication link. The line card contains a control unit which is configured to determine a current transmission capacity of the communication link based on state information about at least one current operating condition of the communication link. The control unit is further configured to adapt based on the current transmission capacity the payload data rate and a forward error correction data rate for payload data of the payload data rate by maximizing the payload data rate. The line card may be for example an optical transport line interface which is connectable to the communication link being an optical communication link. In such a case, the said line card may be operable for example according to the ITU-T G.709/Y.1331 standard.

The embodiments provide a first advantage of providing an extra bandwidth by exploiting a bandwidth above a headroom bandwidth which has been set to allow an error free operation even if aging effects of the communication link may deteriorate the transmitted signal or if a maximum possible length of the transmission path of the communication link will be used. Thereby, payload transmission compared to current fixed data rates such as 100 Gbit/s can be increased and maximized because in case of switching a communication link from a first transmission path to a second transmission path having for example optical fibers with a larger transmission quality or a shorter distance than the first transmission path a reduced amount of FEC overhead could be utilized in favor of an increased amount of payload data across the communication link.

The embodiments offer a second advantage of having the capability to control the amount of payload data based on changing operation conditions of a transmission path such as characteristics of the optical fibers and/or impairments of optical components used along the transmission path. Existing deployments can't take advantage of a current optical fiber deployment situation such as an increased transmission performance at a beginning of a service life and a decreasing transmission performance at later operation times.

The embodiments provide a third advantage of optimizing a line utilization rate of the optical fibers in case of new optical line cards which provide higher data rates than present line cards. Nowadays, bit rate adjustments are not performed at the line cards or can be performed only inefficiently according to predefined frame formats.

The embodiments offer a fourth advantage of providing new line cards with variable line rates. Thereby, complexity and costs with respect to existing line cards can be reduced.

The embodiments provide a fifth advantage of reducing latency in comparison to existing communication links because data stream conversion such as multi-stage multiplexing can be avoided.

The embodiments provide a sixth advantage of boosting best effort data traffic in data transport networks by exploiting the extra bandwidth.

In summary, embodiments provide for a signal structure with a totally flexible overall data rate and a flexible share of the payload data rate and the forward error correction overhead rate which can be adjusted preferably dynamically according to link route characteristics, intended operation margin, dynamically changing impairments of the communication link and components such as optical components in use. The overall data rate and the splitting of the overall data rate into the payload data rate and the forward error correction data rate can be automatically adjusted for example by one or several feedback loop(s). Feedback criteria may be for example transmission length parameters such as a number of ROADMs, a number of optical filters and/or a number of optical amplifiers for a currently used communication path, fiber impairments over life-time, attenuation changes due to changing loss of fiber or add splices, increase of connector loss or degradation of optical components over lifetime. An automatic detection mechanism may evaluate FEC transmission errors and/or so-called OTUvar- and ODUvar-bit-error counters.

In a preferred embodiment, the maximizing of the payload data rate may contain increasing the payload data rate until an error data rate exceeds a predefined error data rate and until the payload data rate and the forward error correction data rate completely utilizes the current transmission capacity.

In a further preferred embodiment, the adapting step adapts a frame format of at least one data transport signal of the communication link by controlling a size of a payload section of the frame format for being filled by the payload data and a size of a forward error correction section of the frame format for being filled by forward error correction data of the forward error correction data rate. This means that the payload section and the forward error correction section are of flexible non-predetermined size.

When the communication link may be an optical communication link for optical data transport signals, the frame format may be based on ODUk/OTUk frame formats (OTUk = Optical channel Transport Unit-k) such as defined by the ITU-T G.709 standard.

Alternatively, the communication link may be an electrical communication link for electrical data transport signals. In such a case, a similar frame format as used for OTN and as defined by the ITU-T G.709 standard may be applied.

In an even further preferred embodiment, the determining step may determine the current transmission capacity based on a mapping table which contains mappings between ranges of values for the state information and values for the current transmission capacity.

In a further preferred embodiment, the determining step determines the current transmission capacity independently for opposite directions of transmission of the communication link and the adapting step adapts the payload data rate and the forward error correction data rate independently for the opposite directions of transmission of the communication link. The preferred embodiment provides increased flexibility when adapting frame formats on a communication link because first payload data use a different longer or shorter transmission path of the communication than second payload data which are sent in an opposite direction. But even if a same transmission path may be used for the opposite directions transmission quality of transmitters and reception quality of receivers may be different for both opposite directions.

According to an even further preferred embodiment, the method may further contain the step of determining an initial payload data rate and an initial forward error correction data rate based on the determined initial transmission capacity or the step of utilizing a preconfigured initial payload data rate and a preconfigured initial forward error correction data rate and the determined initial forward error correction data rate or the preconfigured initial forward error correction data rate may utilize a most robust forward error correction coding. The most robust forward error correction coding may be chosen in such a way, that an error free transmission by using the forward error correction data can be guaranteed or is obtained with a large likelihood such as 99 %. Thereby, retransmission or too much retransmissions can be avoided after an initialization of a line card which performs the method. The initialization of the line card may be required when the line card has been connected to the communication link a first time or when the line card has been reconnected to the communication link after an outage time or when a routing path of the communication link has been changed.

In a further preferred embodiment, in a first time period after the initializing step the determining step and the adapting step may be performed iterative with a first cycle time and in a second time period after said first time period the determining step and the adapting step may be performed with a second cycle time larger than the first cycle time. This embodiment allows obtaining a working point in a fast way and reducing the processing power for further cycle times when the working point has been achieved.

In an even further preferred embodiment, the method may contain the step of negotiating the initial transmission capacity with a network node at an opposite end of the communication link. Preferably, the negotiating step contains transmitting and/or receiving control data describing at least one parameter of the payload data rate, of the forward error correction rate or of the frame format. The negotiation may be triggered by one of the network nodes at the ends of the communication link and preferably at a network node which generates and transmits at least one data transport signal which contains the payload data rate and the forward error correction data rate. Alternatively, the negotiation may be triggered by a third network node instead of one of the network nodes at both ends of the communication link. Thereby, it may be verified whether both network nodes at the ends of the communication link are configured to handle and process data transport signals using such an initial transmission capacity, such a payload data rate and such a forward error correction data rate.

Preferably, the adapting step adapts the payload data rate with incremental steps of a smallest utilizable channel data unit or adapts the payload data rate continuously without the incremental steps. The smallest utilizable channel data unit may be for example an ODU0 optical channel data unit.

In a further preferred embodiment, the state information about the at least one current operating condition of the communication link is state information about at least one operating parameter of at least one device which generates transmission signals for the communication link or is state information about at least one characteristic parameter of the communication link which affects a signal quality on the communication link. The at least one operating parameter may be for example a bias current of a laser module configured to transmit single wavelengths via an optical fiber. The at least one characteristic parameter may be for example a transmission length of the communication link, a fabrication model of an optical fiber of the communication link, a transmitter type of a line card connected to the communication link for transmitting the at least one data transport signal, a receiver type of a line card connected to the communication link for receiving the at least one data transport signal, at least one component tolerance of a device which is used for operating the communication link.

In an even further preferred embodiment, the adapting step may contain the step of verifying whether a transmission error rate exceeds a hysteresis value or is outside a hysteresis range and the adapting step is executed when the transmission error rate has exceeded the hysteresis value or is outside the hysteresis range. Thereby, undesirable oscillations around a corresponding operating point can be avoided. If a maximum allowed error rate value is not hit already, more payload data and/or fewer error correction data may be transmitted until the maximum allowed error rate is hit or exceeded. Without the hysteresis, in a further cycle or iteration fewer payload data and/or more error correction data may be transmitted for getting an error rate value below the maximum allowed error rate value again and then in an even further cycle or iteration more payload data and/or fewer error correction data would be transmitted again until the maximum allowed error rate would be hit or exceeded again.

Preferably, the adapting step contains the sub-step of verifying whether a transmission of the payload data provides a current error data rate equal to or below a predefined error data rate.

In such a case, the adapting step may further contain one of the following sub-steps when the current error data rate is below or equal to the predefined error rate:

- increasing the payload data rate by a first predefined amount and decreasing the forward error correction data rate by the first predefined amount without changing an overall data rate comprising the payload data rate and the forward error correction data rate;

- increasing the payload data rate by a second predefined amount by increasing the overall data rate by the second predefined amount without changing the forward error correction data rate.

Also in such a case, the adapting step may further contain one of the following sub-steps when the current error data rate is above the predefined error data rate:

- increasing the forward error correction data rate by a third predefined amount and decreasing the payload data rate by the third predefined amount without changing the overall data rate;

- increasing the forward error correction data rate by a fourth predefined amount by increasing the overall data rate by the fourth predefined amount without changing the payload data rate;

- decreasing the payload data rate by a fifth predefined amount by decreasing the overall data rate by the fifth predefined amount without changing the forward error correction data rate.

The first predefined amount, the second predefined amount, the third predefined amount, the fourth predefined amount and the fifth predefined amount may be equal or different.

In a further preferred embodiment, the adapting step further contains a sub-step of operating and controlling a scheduling of the payload data according to the adapted payload data rate via a backpressure mechanism with flow control.

In one preferred embodiment, the line card may further contain a first processing unit, which may be configured to schedule the payload data based on a backpressure mechanism with flow control for obtaining the adapted payload data rate.

The line card may further contain a chip-to-chip interface between the first processing unit and a second processing unit which may be configured to transfer the payload data from the first processing unit to the second processing unit based on the backpressure mechanism with the flow control. Preferably, the chip-to-chip interface may be configured to set up a number of simplex serial links between the first processing unit and the second processing unit based on the determined current transmission capacity.

In even further preferred embodiments, the chip-to-chip interface may be based on the Interlaken Protocol as specified by Cortina Systems Incorporated and Cisco Systems Incorporated or the chip-to-chip interface may be an SPI-4.2 interface which is a version of the so-called System Packet Interface which is published by the Optical Internetworking Forum.

The line card may further contain the second processing unit which may be configured to generate at least one data transport signal based on the adapted payload data rate and the adapted forward error correction data rate.

In a further preferred embodiment, the line card may be configured to combine at least one data packet traffic flow of variable payload data rate with at least one time division multiplexing traffic flow of fixed payload data rate for obtaining the adapted payload data rate.

Further advantageous features of the embodiments of the invention are defined and are described in the following detailed description.

**BRIEF DESCRIPTION OF THE FIGURES**

The embodiments of the invention will become apparent in the following detailed description and will be illustrated by accompanying figures given by way of non-limiting illustrations.

Figure 1 shows schematically a state of the art vertical bar diagram for different sizes of optical transport units when transmitted either via different distances on optical backhauls or via optical backhauls having optical fibers of different quality.

Figure 2 shows schematically a state of the art mapping diagram of a first group of low order optical channel data units mapped to a second group of high order optical channel data units which are further mapped to a group of optical channel transport units.

Figure 3 shows schematically a block diagram of a communication system which contains a long haul transport network and two service networks according to an exemplarily embodiment of the invention.

Figure 4 shows schematically a block diagram of a line card of an edge router of the long haul transport network according to an exemplarily embodiment of the invention.

Figure 5 shows schematically a block diagram of a frame format for payload data and forward error correction data according to an exemplarily embodiment of the invention.

Figure 6 shows schematically a block diagram with details of two processing units of the line card and an interface between the two processing units according to an exemplarily embodiment of the invention.

Figure 7 shows schematically an enhanced mapping diagram between optical channel data units and optical channel transport units according to an exemplarily embodiment of the invention.

Figure 8 a), 8 b) and 8 c) show schematically a flow diagram of a method for optimizing a payload data rate on a communication link according to an exemplarily embodiment of the invention.

Figure 9 shows schematically a vertical bar diagram for a variable amount of payload data and a variable amount of FEC data both in arbitrary units with respect to different characteristics of an optical communication link according to exemplarily embodiments of the invention.

Figure 10 shows schematically a further vertical bar diagram for a variable amount of payload data and a fixed amount of FEC data both in arbitrary units with respect to ageing effects of an optical communication link according to an exemplarily embodiment of the invention.

**DESCRIPTION OF THE EMBODIMENTS**

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

A splitting of processing functions across processing units shown in the Figures is not critical, and as can be understood by those skilled in the art that the number of processing units, the number of processing functions and an allocation of the processing functions to the processing units may vary without departing from the scope of the embodiments of the invention as defined in the appended claims. The number of the steps for performing the method(s) is not critical, and as can be understood by those skilled in the art that the number of the steps and the sequence of the steps may vary without departing from the scope of the embodiments of the invention as defined in the appended claims.

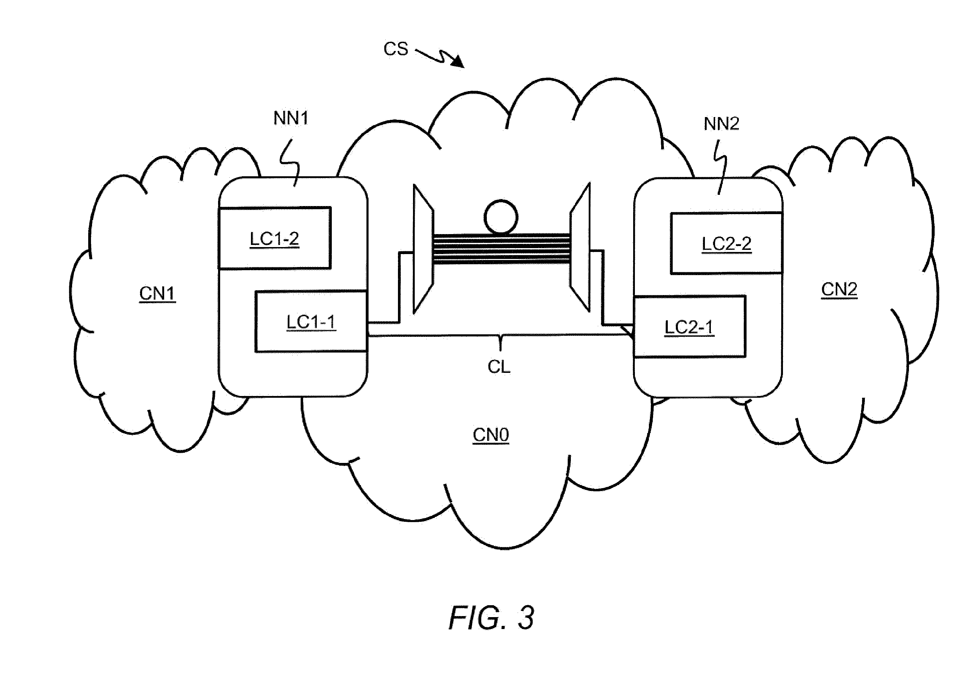

Figure 3 shows schematically a block diagram of a communication system CS which contains a transport network CN0, a first service network CN1 and a second service network CN2. The communication system CS further contains a first network node NN1 which connects the first service network CN1 to the transport network CN0 and a second network node NN2 which connects the second service network CN2 to the transport network CN0.

The communication system CS may contain one or several further transport network(s), one or several further service network(s) and one or several further network node(s) for connecting the one or several further service network(s) to the transport network CN0 or to the one or several further transport network(s).

The transport network CN0 contains a communication link CL which connects the first network node NN1 with the second network node NN2 via a non-wireless connection such as a fiber connection or a cable connection. The transport network CN0 may contain one or several further selectable communication links between the first network node NN1 and the second network node NN2 which are not shown for simplification.

The transport network CN0 may be for example any optical long haul transport network known to persons skilled in the art. With respect to the following description, the transport network CN0 may apply OTUk optical channel transport units (with character k used for identifying the various optical channel transport units) and ODUk optical channel data units (with charater k used for identifying the various optical channel transport units) and various FEC codings according to the ITU-T G.709/Y.1331 standard.

The transport network CN0 may be for example a so-called Access-, a so-called Metro-, a so-called Core-, or a so-called WDM optical transport network. In an even further alternative, the transport network CN0 may be a packet data network which interconnects via a DWDM transport link so-called data centres which are facilities used to house computer systems and associated components, such as telecommunications and storage systems. The DWDM transport links between the data centers are often point-to-point connections which are very suitable for payload line rate optimizations based on the embodiments described in the following.

The communication link CL may contain as a transmission medium a single optical fiber segment between the network nodes NN1, NN2 or may contain several optical fiber segments and intermediate network nodes such as signal regenerators or switches or routers which interconnect the several optical fiber segments. Alternatively, the communication link CL may apply as a transmission medium a data cable for transmitting electrical signals.

The first network node NN1 may be for example a first so-called converged data packet/TDM transport network element which is adapted to process and forward data packet flows and TDM traffic flows simultaneously. The first network node NN1 contains a first line card LC1-1 which converts electrical signals into optical signals for a transmission of the optical signals via the communication link CL and/or converts further optical signals into further electrical signals for a reception of the optical signals via the communication link CL. The first network node NN1 further contains a second line card LC1-2 as an optical or electrical interface to the first service network CN1. The first network node NN1 may contain one or several further line card(s) as (a) further interface(s) to one or several further service network(s) which are not shown for simplification.

In a same way, the second network node NN2 may be for example a second converged data packet/TDM transport network element with a same functionality as the first network node NN1. The second network node NN2 contains a first line card LC2-1 which converts electrical signals into optical signals for a transmission of the optical signals via the communication link CL and/or converts further optical signals into further electrical signals for a reception of the optical signals via the communication link CL. The second network node NN2 further contains a second line card LC2-2 as an optical or electrical interface to the second service network CN2. The second network node NN2 may contain one or several further line card(s) as (a) further interface(s) to one or several further service network(s) which are not shown for simplification.

Alternatively, the first network node NN1 and the second network node NN2 may be edge routers, core routers or Ethernet switches for processing data packet traffic flows.

The first service network CN1 and the second service network CN2 may be operated as a LAN (LAN = Local Area Network), MAN (MAN = Metropolitan Area Network) or WAN (WAN = Wide Area Network) and may be based on data transport techniques such as OTN, PTN (PTN = Packet Transport Network), or Metro-E (Metro-E = Metropolitan-area Ethernet).

One or both of the first line card LC1-1 of the first network node NN1 and the first line card LC2-1 of the second network node NN2 may be configured to obtain information of one or several parameters of the communication link CL such as a current transmission length of the communication link CL, a current transmission path of the communication link CL and current impairments of transmission lines and/or of devices for transmitting and/or receiving data signals via the communication link CL.

One or both of the line cards LC1-1, LC2-1 may be further configured to determine a current transmission capacity of the communication link CL based on the obtained current information and to adapt based on the determined current transmission capacity a payload data rate of the communication link CL and a forward error correction data rate of the communication link CL by maximizing the payload data rate. The forward error correction data rate is applied for payload data of the payload data rate so that a counterpart line card at an opposite end of the communication link CL is able to recover error free the payload data of the payload data rate.

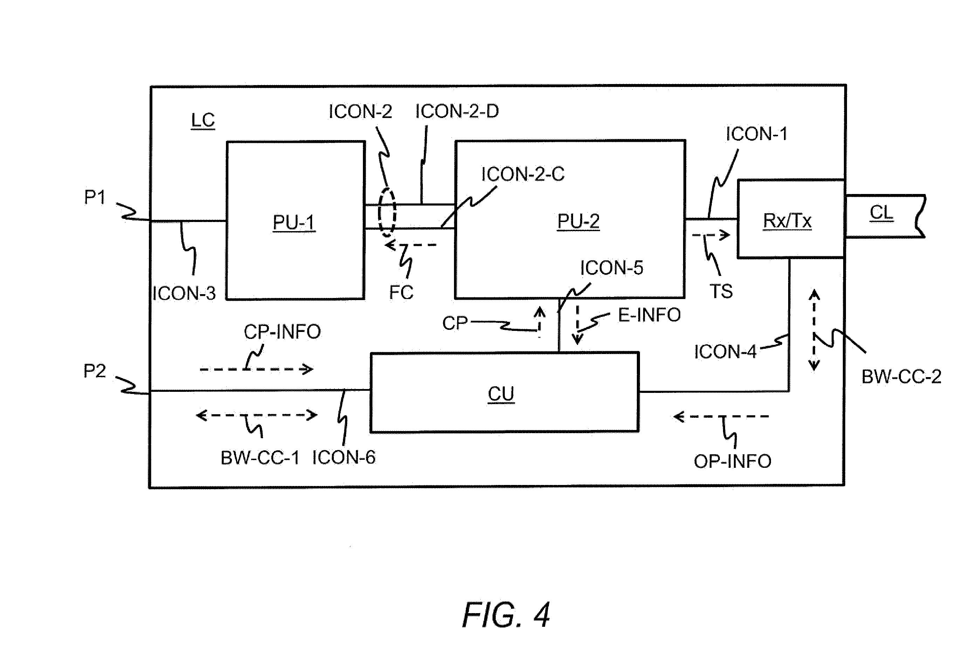

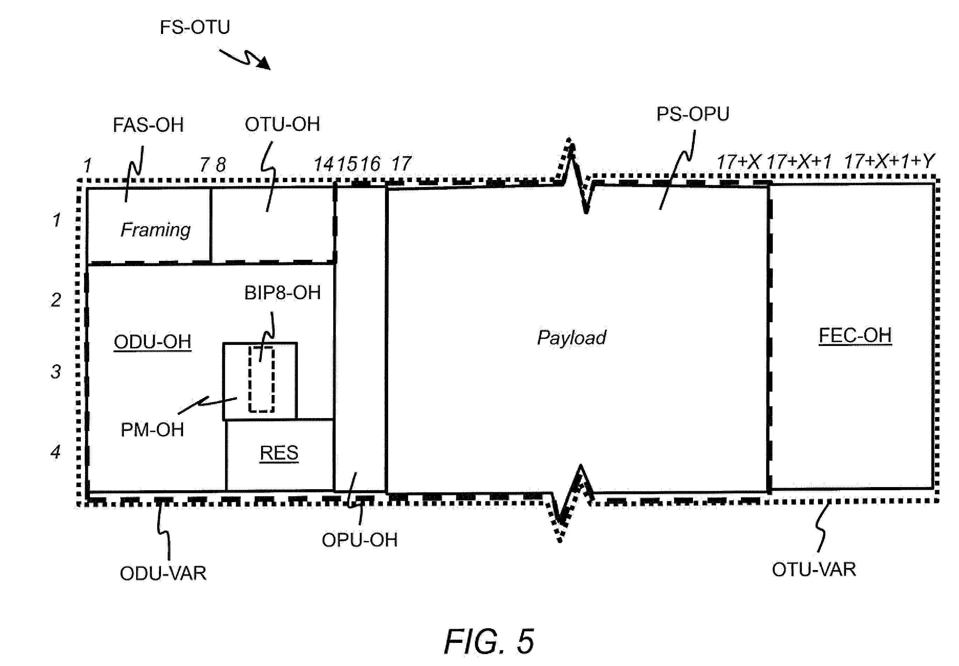

In a preferred embodiment (see also Figure 5 and following description) a frame format of at least one data transport signal to be transmitted via the communication link CL may be adapted based on the determined current transmission capacity by controlling a size of a payload section of the frame format for being filled by the payload data and a size of a forward error correction section of the frame format for being filled by forward error correction data of the forward error correction data rate. More information regarding the processing at one or both of the line cards LC1-1, LC2-1 will be given in the following description with respect to Figures 4 to 9.

Figure 4 shows schematically a block diagram of a line card LC to be applied for example in at least one of the network nodes NN1, NN2. This means that the line card LC may be for example the first line card LC1-1 of the first network node NN1 or the first line card LC2-1 of the second network node NN2.

The line card LC contains a transceiver module Rx/Tx which is connectable to the communication link CL. In an alternative embodiment, the line card LC contains a transmitter module instead of the transceiver module Rx/Tx.

The line card LC further contains a second processing unit PU-2 which is connected to the transceiver module Rx/Tx via a first internal connection ICON-1 and which is configure to map the payload data and the forward error correction data to a transmission signal TS according to an adaptable OTN frame format FS-OTU which is shown in Figure 5.

The line card LC may further contains a first processing unit PU-1 which is connected to the second processing unit PU-2 via a second internal connection ICON-2. As shown in Figure 4, the second internal connection ICON-2 may be split into a data connection ICON-2-D used for transmitting the payload data from the first processing unit PU-1 to the second processing unit PU-2 and a control connection ICON-2-C used for transmitting control signals such as flow control commands from the second processing unit PU-2 to the first processing unit PU-1. The first processing unit PU-1 is configured to schedule the payload data which shall be transmitted via the transmission signal TS by using the adaptable frame format. One or both of the second processing unit PU-2 and the first processing unit PU-1 may be an integrated circuit such as an FPGA (FPGA = Field Programmable Gate Array) or an ASIC (ASIC = Application Specific Integrated Circuit). This means that the functionality of the second processing unit PU-2 and the first processing unit PU-1 may be distributed across two separate integrated circuits which are mounted for example on a printed circuit board.

Alternatively, the functionality of the second processing unit PU-2 and the first processing unit PU-1 may be combined in a single processing unit i.e. a single integrated circuit which is not shown in Figure 4 for simplification.

The line card LC further contains a first port P1, which is connected via a third internal connection ICON-3 to the first processing unit PU-1 and which is connectable for example to a backplane of the first network node NN1 or the second network node NN2. The first port P1 may be preferably a bidirectional port for transmitting payload data to the line card LC or for receiving payload data from the line card LC. Alternatively, the first port P1 may be a unidirectional port for providing payload data to the first processing unit PU-1 of the line card LC.

The line card LC even further contains a control unit CU which is configured to execute an adaptive control algorithm which continuously adapts the payload data rate and the forward error correction data rate to the current transmission capacity of the communication link CL by maximizing the payload data rate which is described below in more detail. How the payload data rate and the forward error correction data rate is mapped to the adaptable OTN frame format FS-OTU is provided to the counterpart line card at the opposite end of the communication link CL for example by in-band signaling in an overhead section of OTUk optical transport units (see Figure 5 and following description).

The control unit CU may be connected via a fourth internal connection ICON-4 to the transceiver module Rx/Tx, via a fifth internal connection ICON-5 to the second processing unit PU-2 and via a sixth internal connection to a second port P2 of the line card LC which is connectable for example to the backplane of the first network node NN1 or the second network node NN2.

The control unit CU is further configured to receive operation parameter information OP-INFO about one or several operating parameters(s) of the transceiver module Tx/Tx via the fourth internal connection ICON-4 from the transceiver module Rx/Tx. One of the operating parameters may be for example a currently used bias current of a laser diode which is applied for transmitting a single wavelength optical signal via the communication link CL. A further operating parameter may be for example an optical receiver sensitivity.The control unit CU is even further configured to receive characteristic parameter information CP-INFO about one or several characteristic parameter(s) of the communication link CL via the sixth internal connection ICON-6 from the second port P2. The characteristic parameters may be for example:

- a transmission length of the communication link CL,

- a number of intermediate optical power amplifiers used along the communication link CL,

- a number of ROADMs (ROADM = Reconfigurable Optical Add Drop Multiplexer) used along the communication link CL,

- a type of an optical fiber applied for the communication link CL,

- a characteristic curve of a device which is applied to operate the communication link such as a chromatic dispersion and other characteristic an optical fiber type, a gain response curve of an optical amplifier applied along the communication link CL, a sensitivity curve of an optical receiver applied at the counterpart line card.

This list does not exclude further possible characteristic parameters of the communication link CL which have an impact on the current transmission capacity of the communication link CL.

The characteristic parameter information CP-INFO may be for example provided by manual setting or via a so-called GMRE control plane (GMRE = GMPLS Routing Engine; GMPLS = ) known to skilled person in the art or by an SDN controller (SDN = Software Defined Networking) or by a path computation controller according to a PCE-based architecture (PCE = Path Computation Element) known to skilled persons in the art.

The control unit CU is further configured to provide one or several control parameter(s) CP via the fifth internal connection ICON-5 to the second processing unit PU-2.

The control unit CU may adapt the payload data rate and/or the forward error correction data rate for example in a following iterative way:

When the line card LC is initialized, the control unit CU determines an initial transmission capacity of the communication link CL.

In a first alternative, the control unit CU determines the initial transmission capacity based on a preconfigured initial transmission capacity value which may be stored for example in a memory sub-unit of the control unit CU. Preferably, the memory sub-unit may also store a preconfigured initial payload data rate and a preconfigured initial forward error correction data rate.

In a second alternative, the control unit CU may apply for determining the initial transmission capacity of the communication link CL a pre-configured mapping table which may be stored preferably in the memory sub-unit of the control unit CU or alternatively in a separated memory unit of the line card LC (not shown in Figure 4 for simplification). The pre-configured mapping table may contain a pre-defined number of parameter groups with a number of e.g. 20, 50, 100, 1000 or even more which are shown below exemplarily for determining or obtaining the initial transmission capacity which may be usable for transmitting the payload data via the communication link CL. Four of such parameter groups are shown in the following Tables 1 to 4.

An overall range of conceivable lengths of the transmission path of the communication link CL may be grouped to several adjacent sub-ranges of lengths L-Range 1 [a1,a2), L-Range 2 [a2,a3)], L-Range 3 [a3,a4), ... with a1<a2<a3<a4 (a square bracket means that the value is part of the range and a round bracket means that the value is not part of the range). In a same way, an overall range of conceivable numbers of intermediate optical power amplifiers may be grouped to several adjacent sub-ranges of numbers NA-Range 1 [b1,b2), NA-Range 2 [b2,b3)], NA-Range 3 [b3,b4), ... with b1<b2<b3<b4, an overall range of conceivable numbers of ROADMs may be grouped to several adjacent sub-ranges of numbers NR-Range 1 [c1,c2), NR-Range 2 [c2,c3)], NR-Range 3 [c3,c4), ... with c1<c2<c3<c4 and further overall ranges of further conceivable lengths, numbers or values of further characteristic parameters of further devices such as an optical module and its electrical components such as ASICs, DSPs (DSP = Digital Signal Processor) etc. and its electro-optical components such as lasers, receiving diodes, amplifiers, components for dispersion compensation etc. may be group to several further adjacent sub-ranges of lengths, numbers or values which is indicated by the dots in the fourth column. Even so in a same way, an overall range of conceivable values of the bias current of the laser diode may be grouped to several adjacent sub-ranges of values BC-Range 1 [m1,m2), BC-Range 2 [m2,m3)], BC-Range 3 [m3, m4), ... with m1<m2<m3<m4 and further overall ranges of further conceivable lengths, numbers or values of further operating parameters of devices of the communication link CL may be group to several further adjacent sub-ranges of lengths, numbers or values which is indicated by the dots in the sixth column.

The seventh column contains the initial transmission capacity with different values A1, A2, A3, A4, ... for example in GBit/sec. The values A1, A2, A3, A4, ... for the initial transmission capacity may be predefined for example according to present practice by calculating and engineering the payload line rates and FEC line rates to the worst case theoretical values of the different parameters according to the columns one to six of the tables 1 to 4 which take into account the lifetime deterioration of transmission performance (see also background of the invention) and by setting each of the initial transmission capacity values equal to the sum of one of the calculated initial payload rates and a corresponding one of the calculated initial FEC line rates. In a preferred embodiment, the tables 1 to 4 may contain several of such initial transmission capacity values which are grouped closely around a medium initial transmission capacity value with relative differences to the medium initial transmission capacity value of for example one percent to ten percent of the medium initial transmission capacity value and a specific initial transmission capacity value may be labeled for selection for example by an operator of the transport network CN0.

Each of the parameter groups may contain one combination of a sub-range of lengths of the transmission length of the communication link CL, a sub-range of numbers of intermediation optical power amplifiers along the communication link CL, a sub-range of numbers of ROADMs along the communication link CL, a sub-range of values of the bias current of the laser diode and in further embodiments also one or several further sub-ranges of characteristic parameters of the communication link CL or of operation parameters of devices of the communication link CL. In one embodiment, the mapping table may contain a parameter group for each permutation of the combination of sub-ranges.

Table 1: Parameter group 1

| Length of transmission path | Number of intermediate optical power amplifiers | Number of ROADMs | ... | Bias current of laser diode | ... | Initial transmission capacity |
|---|---|---|---|---|---|---|
| LTP-Range 1 | NA-Range 1 | NR-Range 1 | ... | BC-Range 1 | ... | [GBit/s] |
| [a1,a2) | [b1,b2) | [c1,c2) | ... | [m1,m2] | ... | A1 |

Table 2: Parameter group 2

| Length of transmission path | Number of intermediate optical power amplifiers | Number of ROADMs | ... | Bias current of laser diode | ... | Initial transmission capacity |
|---|---|---|---|---|---|---|
| LTP-Range 2 | NA-Range 1 | NR-Range 1 | ... | BC-Range 1 | ... | [GBit/s] |
| [a2,a3) | [b1,b2) | [c1,c2) | ... | [m1,m2] | ... | A2 |

Parameter group 3

| Length of transmission path | Number of intermediate optical power amplifiers | Number of ROADMs | ... | Bias current of laser diode | ... | Initial transmission capacity |
|---|---|---|---|---|---|---|
| LTP-Range 2 | NA-Range 2 | NR-Range 1 | ... | BC-Range 1 | ... | [GBit/s] |
| [a2,a3) | [b2,b3) | [c1,c2) | ... | [m2,m3] | ... | A3 |

Parameter group 4

| Length of transmission path | Number of intermediate optical power amplifiers | Number of ROADMs | ... | Bias current of laser diode | ... | Initial transmission capacity |
|---|---|---|---|---|---|---|
| LTP-Range 1 | NA-Range 2 | NR-Range 2 | ... | BC-Range 1 | ... | [GBit/s] |
| [a1,a2) | [b2,b3) | [c2,c3) | ... | [m1,m2] | ... | A4 |

Such a parameter group will be selected, which has corresponding ranges that fit to the current values and the current numbers of the characteristic parameters and operation parameters. If no one of the parameter groups has ranges that fit to all current values and current numbers than a parameter group may be chosen with ranges that are closest to any non-fitting current values and/or non-fitting current numbers. From the selected parameter group (e.g. from column 7 with respect to the exemplarily shown parameter groups) the initial transmission capacity may be obtained.

When the initial transmission capacity has been determined as described above, the determined initial transmission capacity may need to be accepted by a counterpart line card (or by a counterpart network node with contains the counterpart line card) which will receive the data transport signals being transmitted by the line card LC. Therefore, the control unit CU may be preferably even further configured to execute a bandwidth negotiation with a counterpart control unit of the counterpart line card in downstream direction by exchanging one or several bandwidth control messages BW-CC-1 via the sixth internal connection ICON-6 by applying out-of-band control signaling or by exchanging one or several bandwidth control messages BW-CC-2 via the fourth internal connection ICON-4 by applying in-band signaling and by using for example a not yet used and reserved byte of a reserved section RES of a so-called ODUk overhead ODU-OH of the OTN frame format FS-OTU (see Figure 5). The bandwidth negotiation may be done for example by transmitting to the counterpart line card as a first control message a BANDWIDTH REQUEST message which contains the value of the initial transmission capacity which has been determined via the pre-configured mapping table. The counterpart line card may perform for example when receiving the value of the initial transmission capacity an internal check whether a processing capacity of the counterpart line card is large enough to process any data transport signals which will be received by such an initial transmission capacity. When the processing capacity is sufficient, the counterpart line card may send as a further control message a BANDWIDTH ACCEPT message. Otherwise, the counterpart line card may determine a reduced initial transmission capacity which is smaller than the determined initial transmission capacity and the counterpart line card may send as an even further control message a BANDWIDTH REJECT message which contains a value of the reduced initial transmission capacity.

Then, the control unit CU may use either the determined initial transmission capacity or the reduced initial transmission capacity for being split into an initial payload data rate and an initial forward error correction data rate.

The splitting of the initial transmission capacity into the initial payload line rate and the initial FEC data rate may be done for example in the following way:

The control unit CU may be further configured to select for the initial FEC data rate preferably a FEC data rate with a largest data rate of all available FEC versions or a further FEC data rate of the available FEC versions with a maximum robustness. Preferably, the FEC data rate with the largest data rate may be also the FEC data rate with the maximum robustness. Maximum robustness means that the corresponding FEC data rate provides the highest possibility for an error free recovery of the payload data at the counterpart line card.

The FEC data rate may be selected from a group of FEC versions known to persons skilled in the art such as RS-FEC, enhanced FEC and SD-FEC which are specified in ITU-T G.709 Am. I. Also new FEC version which will be specified in the future may be applicable for the embodiments of the present invention.

The OTN frame format FS-OTU as shown in Figure 5 is organized in an octet-based block frame format with four rows and a number of 17+X+Y columns. The OTN frame format FS-OTU may have a same appearance as an OTN frame format as specified in the ITU-T G.709 standard. The main differences are a variable selectable size of a so-called OPUk payload section PS-OPU for the payload data of the payload data rate and a variable selectable size of a so-called OTUk FEC section FEC-OH for the FEC data of the FEC data rate.

In general, a distribution of the payload data and the FEC data may be performed according to following equation:

$$OTUvar1 = ODUvar2 + FECvar3 \qquad (1)$$

with

> $OTUvar1$: size in bits or bytes of an OTUk frame format OTU-VAR or line rate in Gbit/sec of the OTUk frame format OTU-VAR or type of a container of the OTUk frame format OTU-VAR;

> $ODUvar2$: size in bits or bytes of an ODUk frame format ODU-VAR or line rate in Gbit/sec of the ODUk frame format ODU-VAR or type of a container of the ODUk frame format ODU-VAR;

> $FECvar3$: size in bits or bytes of FEC overhead section FEC-OH or line rate in Gbit/sec of the FEC overhead section FEC-OH or type of a container of the FEC overhead section FEC-OH.

Instead of using the equation (1) the parameters $OTUvar1$, $ODUvar2$ and $FECvar3$ may be indicators for specific predefined data containers which have specific sizes in bits or bytes or specific line rates in Gbit/sec.

In one embodiment, the sizes or line rates of the parameters $OTUvar1$, $ODUvar2$ and $FECvar3$ may be freely chosen. In an alternative embodiment, the parameters $OTUvar1$, $ODUvar2$ and $FECvar3$ may be predefined with specific sizes or specific line rates, e.g. the line rates may be predefined with increments of 1.25 GBit/sec for OTN signals. In a further alternative embodiment, the parameter $OTUvar1$ may be constant. In such a case, the parameters $ODUvar2$ and $FECvar3$ may be freely chosen or incrementally chosen in such a way, that equation (1) is permanently fulfilled.

Row 1 and columns 1 to 7 of the OTN frame format FS-OTU contain a so-called frame alignment overhead FAS-OH. Row 1 and columns 8 to 14 contain a so-called OTUk overhead OTU-OH. Rows 2 to 4 and columns 1 to 14 contain a so-called ODUk overhead ODU-OH. Row 3 and columns 10 to 12 of the ODUk overhead ODU-OH contain a so-called path monitoring overhead PM-OH. The path monitoring overhead PM-OH contains a so-called BIP-8 overhead BIP8-OH. Rows 1 to 4 and columns 15 and 16 contain a so-called OPUk overhead OPU-OH. Rows 1 to 4 and columns 17 to 17+X contain the OPUk payload section PS-OPU for the payload data of the payload data rate. The parameter X is a variable integer number. The parameter X may be calculated by the control unit CU based on the determined initial payload data rate (see following equation (2)) and may be provided for example as one of the control parameters CP to the second processing unit PU-2 to change the size of the OPUk payload section PS-OPU for the generation of the next OTN frames.

Rows 1 to 4 and columns 17+X+1 to 17+X+Y contain the OTUk FEC section FEC-OH for the FEC data of the FEC data rate. The parameter Y is also a variable integer number. Each of the available FEC versions relates to a specific integer value of the parameter Y. The parameter Y may be calculated by the control unit CU and may be provided as one of the control parameters CP to the second processing unit PU-2.

Alternatively, the control unit CU may provide a first indicator for a specific size of the OTN frame format FS-OTU as shown in Figure 5 and a second indicator for one of the available FEC versions as one of the control parameters CP to the second processing unit PU-2. Based on the second indicator the second processing unit PU-2 may be configured to apply a corresponding FEC version for generation of next OTN frames which implies automatically the size of the OTUk FEC section FEC-OH given by the column parameter Y (see Figure 5). Based on the first indicator the second processing unit PU-2 may obtain from a mapping table the overall size of the OTN frame format FS-OUT. By subtracting the size of the OTUk FEC section FEC-OH and the sizes of the overhead sections FAS-OH, OTU-OH, ODU-OH, OPU-OH the size of the OPUk payload section PS-OPU can be calculated and the OPUk payload section PS-OPU can be used by the second processing unit PU-2 to be filled with an amount of payload data which corresponds to the size of the OPUk payload section PS-OPU.

The control unit CU may be further configured to determine initial payload data rate $IPDR_{ini}$ for example according to following equation:

$$IPDR_{ini} \left[\frac{GBit}{sec}\right] = ITC_{ini} \left[\frac{GBit}{sec}\right] - IFECDR_{ini} \left[\frac{GBit}{sec}\right] \qquad (2)$$

with:

$IOADR_{ini}$: initial transmission capacity,

$IFECDR_{ini}$: initial FEC data rate.

The initial payload data rate $IPDR_{ini}$ and the initial FEC line rate $IFECDR_{ini}$ may be signaled to the counterpart line card by using for example not yet used positions of the reserved section RES of the ODUk overhead ODU-OH ... of the OTN frame format FS-OTU as shown in Figure 5. Therefore, a new protocol needs to be defined and standardized. In a first alternative, not yet used positions of the OTUk overhead OTU-OH may be applied for signaling the initial payload data rate $IPDR_{ini}$ and the initial FEC line rate $IFECDR_{ini}$. In a second alternative, the initial payload data rate $IPDR_{ini}$ and the initial FEC line rate $IFECDR_{ini}$ may be preconfigured at the line card LC and the counterpart line card. In such a case, the initial payload data rate $IPDR_{ini}$ and the initial FEC line rate $IFECDR_{ini}$ don't need to be signaled to the counterpart line card.

A further control parameter CP that may be provided from the control unit CU to the second processing unit PU-2 may be for example a number of CBR signals (CBR = Constant Bit Rate) to be mapped into the frame format FS-ODU. A CBR signal may be for example a data rate of 1.25 Gbit/sec of a so-called ODUk container.

According to an alternative embodiment, processing functions of the first processing unit PU-1 and the second processing unit PU-2 may be implemented in a single processing unit such as an ASIC. In such a case, information such as the buffer fill levels may be passed on or forwarded internally.

In further cycles of the adaptive control algorithm, the control unit CU is further configured to receive error information E-INFO about transmission errors via the fifth internal connection ICON-5 from a FEC counter and/or of a bit error counter. The bit error counter may be for example based on the so-called BIP-8 code which is specified in the ITU-T standard G.709 (see also Figure 5 and corresponding description). The BIP-8 code is used to convey by in-band signaling in an upstream direction towards the line card LC a count of interleaved-bit blocks which have been detected in error by a corresponding ODUk path monitoring sink for a downstream direction from the line card LC to the ODUk path monitoring sink which may be for the example the line card LC2-1 if the line card LC shown in Figure 4 is the line card LC1-1 (see Figure 3). The FEC counter counts for example a number of payload bytes per OTUk frame which have been received in error in upstream and which could not be recovered by the FEC data. The receive error information E-INFO may also contain in addition or alternatively information about transmission errors which have been observed at the counterpart line card and which have been signaled in upstream to the line card LC.

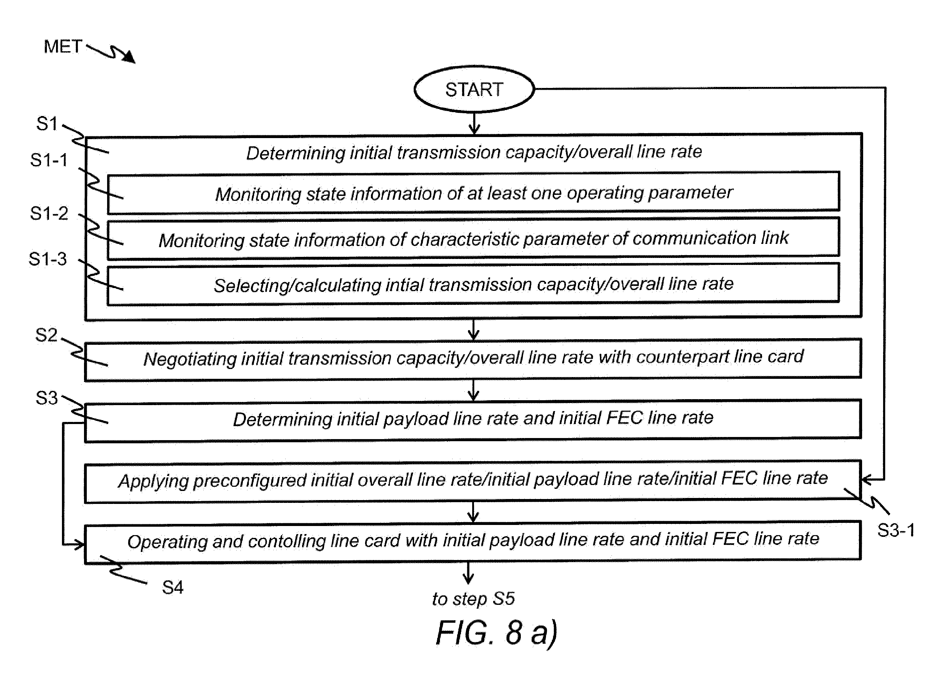

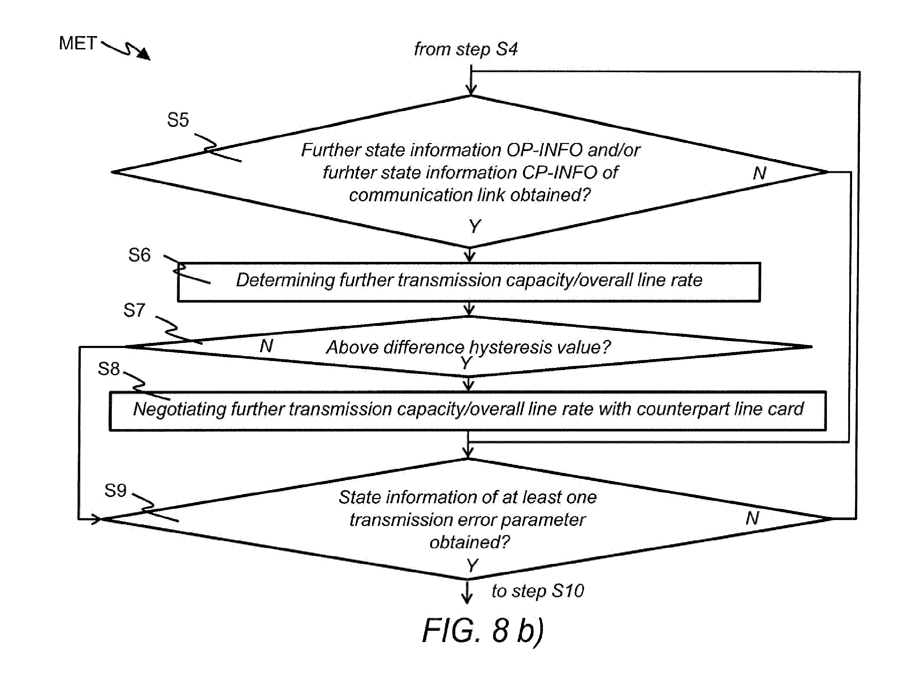

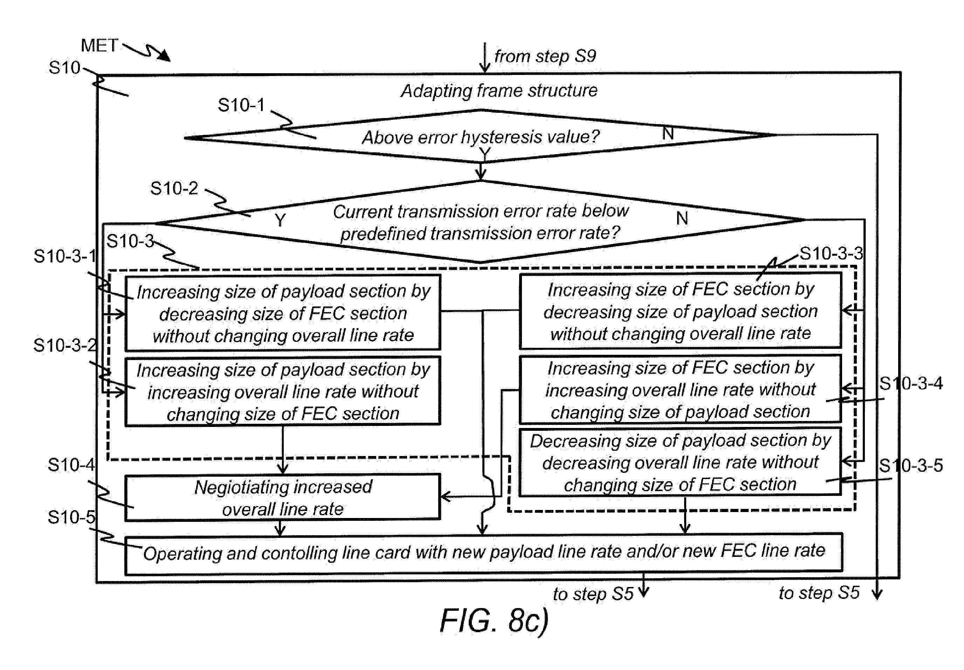

More details regarding the adaption of the payload data rate and the FEC data rate based on error information E-INFO are given in the following description with respect to Figure 8 a), Figure 8 b) and Figure 8 c).

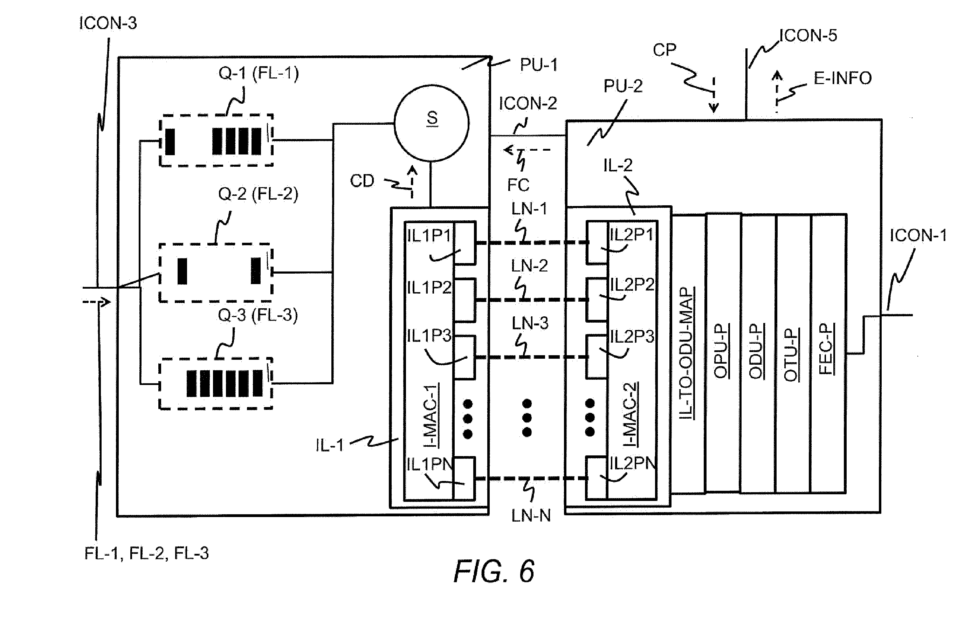

Figure 6 shows the first processing unit PU-1 and the second processing unit PU-2 in more detail according to an exemplarily embodiment of the invention.

The first processing unit PU-1 may contain for example a first data queue Q-1 for storing data packets of a first data flow FL-1, a second data queue Q-2 for storing data packets of a second data flow FL-2, a third data queue Q-3 for storing data packets of a third data flow FL-3 and a scheduler unit S which is configured to decide which data packets from which data queue Q-1, Q-2, Q-3 may be used in a next predefined time frame to generate the payload data rate.

The first processing unit PU-1 is configured to receive via the third internal connection ICON-3 a single payload data flow FL-1 or several payload data flows FL-1, FL-2, FL-3. A first data flow FL-1 may be for example a first packet traffic flow according to a best effort service such a Web browsing, the second data flow FL-2 may be for example a second packet traffic flow according to guaranteed service such as a video-on-demand service with a guaranteed data rate and the third data flow FL-3 may be for example a so-called TDM traffic flow (TDM = Time Division Multiplexing) which represents an aggregate of circuit-based transmission signals like voice communication over traditional digital transport systems such as E1 (a so-called E-carrier system, which has been adopted by the ITU-T), SDH (SDH = Synchronous Digital Hierarchy) or SONET (SONET = Synchronous Optical NETworking). With respect to the above given examples the first data flow FL-1 and the second data flow FL-2 generate an asynchronous packet payload by transmitting much more data packets in downstream direction from the line card LC via the communication link CL towards the counterpart line card than in upstream direction from the counterpart line card via the communication link CL towards the line card LC.

Furthermore, in case of the first data flow FL-1 a larger amount of data packets is only transmitted as long as the Website is not fully displayed on a computer display to a user who performs the Web browsing. This means that the first data flow FL-1 may generate a considerable payload variation.

The first processing unit PU-1 further contains a so-called structured cell interface IL-1. The structured cell interface IL-1 may be for example a so-called Interlaken interface based on the so-called Interlaken protocol. The Interlaken interface contains mainly physical interfaces, data converters, data buffers and a MAC control unit.

The Interlaken protocol builds on channelization and per channel flow control features of SPI-4.2, while reducing a number of integrated circuit (chip) I/O pins by using high speed SerDes technology (SerDes = Serializer/Deserializer) which is a pair of functional blocks commonly used in high speed communications to compensate for limited input/output. SPI-4.2 is a version of the so-called System Packet Interface as published and specified by the Optical Internetworking Forum. By using the Interlaken protocol bundles of serial links create a logical connection between components with multiple channels, backpressure capability, and data-integrity protection to boost the performance of communications equipment. Interlaken manages speeds of up to 6 Gbit/s per pin (lane) and large numbers of lanes can form an Interlaken interface. Therefore, the structured cell interface IL-1 contains a MAC processing layer subunit I-MAC-1 (MAC = Media Access Control) which is configured to process the payload data of the payload data flows FL-1, FL-2, FL-3 by adding information which is required for physical layer processing and by segmenting or combining the payload data to a format which is required for the physical layer processing. The MAC processing layer subunit I-MAC-1 is further configured to guarantee integrity of the payload data and distribution of the payload data across the SerDes lanes LN-1, LN-2, LN-3, ..., LN-N, is further configured to recover the payload data when the line card LC may work as a receiver in upstream direction of the communication link CL and is further configured to detect transmission errors of the payload data. The structured cell interface IL-1 is configurable with a variable number N of PCSs IL1P1, IL1P2, IL1P3, ..., IL1PN (PCS = Physical Coding Sublayer) which are able to provide a variable number N of so-called SerDes lanes LN-1, LN-2, LN-3, ..., LN-N which are simplex serial links between two ICs (IC = Integrated Circuit). The three dots shall indicate further PCSs and further SerDes lanes which are not shown in Figure 6 for simplification.

The PCSs IL1P1, IL1P2, IL1P3, ..., IL1PN allow to apply for each of the SerDes lanes LN-1, LN-2, LN-3, ..., LN-N an individual dedicated encoding. The number N of PCSs IL1P1, IL1P2, IL1P3, ..., IL1PN and the number N of the SerDes lanes LN-1, LN-2, LN-3, ..., LN-N depend on the current transmission capacity as determined by the control unit CU and may be determined according to a maximum possible transmission capacity of the communication link CL. In such a case, a full number of the SerDes lanes LN-1, LN-2, LN-3, ..., LN-N is always used during operation and an actual data rate or line rate may be controlled by a flow control mechanism or by so-called payload backpressure. Therefore, a flow control information FC may be transmitted from the second processing unit PU-2 to the first processing unit PU-1. Alternatively, the number N of the SerDes lanes LN-1, LN-2, LN-3, ..., LN-N may be continuously controlled and adapted according to the current transmission capacity of the communication link CL or according to a current data amount to be transmitted via the communication link CL. When the alternative is applied, electrical energy may be saved and the data rate can be adjusted in a fine range.

In an alternative embodiment instead of the Interlaken protocol, the protocol according to the system packet interface (SPI)-4.2 specification may be directly applied for the structured cell interface IL-1. In such a case, a so-called SPI-4.2 FIFO status channel sends the flow control commands FC from a receiver (e.g. the second processing unit PU-2) to a transmitter (e.g. the scheduler subunit S) at one eighth the rate of a data channel, based on a predefined FIFO status calendar. The predefined FIFO status calendar defines, in order, which port each status update corresponds to. The status updates grant credits for the transmitter to send data for a given port. The number of credits granted is determined by so-called maxburst values that the system packet interface uses for its "hungry" and "starving" indications.

The structured cell interface IL-1 is configured to process a variable amount of bandwidth by regulating the scheduler subunit S with flow control/payload backpressure for example on sub-channel granularity such as the smallest ODU-0 container specified by ITU-T G.709 with a data rate of 1.25 Gbit/sec. Thereby, sub-channels are mapped entirely into the OPUk payload section PS-OPU (see Figure 5) by serializing the data cells from the structured interface and transcoding sub-channel information with a delineation header prepended or appended inside the OPUk payload section PS-OPU to each sub-channel by a technique known to skilled persons in the art. Thereby, reconstruction of a specific tributary low order ODU such as ODU1 or ODU2 at the counterpart line card in downstream direction with intermediate unpacking steps such as from the third group of OTUs (GR-OTU) to the second group of high order ODUs GR-HO-ODU and from the second group of high order ODUs GR-HO-ODU to the first group of low order ODUs according to the state of the art OTN hierarchy as shown in Figure 2 can be avoided and latency is optimized. By using the embodiments described herein the payload data flows FL-1, FL-2, FL-3 may have a same Interlaken cell format and are independent from each other. Therefore, a client signal (one of the payload data flows FL-1, FL-2, FL-3) can be more easily detected and reconstructed.

The line card LC may be also configured to operate according to classical circuit-switched cross-connect systems. In such a case, the backpressure mechanism may decide if a low order tributary signal will be mapped into the OPUk payload section PS-OPU or not. In such a case the payload data rate can be changes in steps of preconfigured signal rates, such as for the so-called ODU-0 signal with a data rate of 1.25 Gbit/s, the so-called ODU-1 signal with a data rate of 2.5 Gbit/s, the so-called ODU-2 signal with a data rate of 10 Gbit/s and so on (see ITU-T G.709 standard).

Using the payload backpressure, the payload variation of the first data flow FL-1 can be easily controlled by

14

transmitting the flow control information FC from the second processing unit PU-2 via the second internal connection ICON-2 to the first processing unit PU-1. The flow control information FC may be for example so-called Xon/Xoff signaling information. The Xon/Xoff signaling information is transmitted from the second processing unit PU-2 according to a buffer fill level of a data buffer (e.g. a FIFO buffer; FIFO = First In First Out) of the second processing unit PU-2 to the first processing unit PU-1 which may also contain a data buffer. Buffer fill levels of the data buffers of the second processing unit PU-2 and the first processing unit PU-1 may be realized for example by up/down counters. The Xon/Xoff signaling information instructs the first processing unit PU-1, whether further payload data should be transmitted or should be not transmitted. The Xon/Xoff signaling information provides a real-time protocol with low latency for being able to use small data buffers at the first processing unit PU-1 and at the second processing unit PU-2.

The first network node NN1 and the second network node NN2 (see Figure 3) may be for example TDM/CBR switches (TDM = Time Division Multiplexing, CBR = Constant Bit Rate) or packet switches based on Ethernet, IP (IP = Internet Protocol), or MPLS (MPLS = Multiprotocol Label Switching) which utilize a cell-based switching infrastructure with structured interfaces known to skilled persons in the art. The packet switches are configured to segment packet traffic into data cells (e.g. based on the so-called Interlaken protocol) and thereby each of the data cells is associated with a so-called channel number. Likewise, the TDM/CBR switches are configured to segment the TDM traffic into TDM streams for example according to the so-called OIF OTN over packet fabric implementation agreement (OIF = Optical Internetworking Forum) and thereby each one of the TDM streams is associated with a so-called channel ID.

The line card LC may be either operated with a fixed overall data rate (see also Figure 11 and corresponding description) or with a variable overall date rate (see also Figure 12 and corresponding description). The terms overall data rate and overall line rate may be used exchangeable.

The scheduler subunit S may be configured to control scheduler grants for the data queues Q-1, Q-2, Q-3. This means that the scheduler subunit S applies a scheduler algorithm known to skilled persons in the art which continuously decides by receiving a scheduler grant which one of the data queues Q-1, Q-2, Q-3 is allowed to output one data packet or several data packet(s). Thereby, the scheduler subunit S works as a traffic regulator.

The scheduler subunit S may be configured to receive credits CD periodically with a predefined time period for example from a so-called credit generator which may be part of the structured cell interface IL-1. Based on the received credits CD the scheduler subunit S determines how many data packets in total may be output by the data queues Q-1, Q-2, Q-3 per time unit such as per second and which one of the data queues Q-1, Q-2, Q-3 may be allowed to output data packets for example according to a QoS labeling (QoS = Quality of Service) of the payload data flows FL-1, FL-2, FL-3.

If for example the control unit CU has decided to reduce the payload data rate and thereby also the size of the OPUk payload section PS-OPU of a future OTN frame format FS-OUT to be applied, the data buffer of the second processing unit PU-2 gets overloaded because payload data which arrive at the second processing unit PU-2 are not mapped any more with a same data rate to the OPUk payload sections PS-OPU. In such a case, the data buffer of the second processing unit PU-2 provides an indication to a MAC processing layer subunit I-MAC-2 of the second processing unit PU-2. Then an Xoff signaling information is sent to the first processing unit PU-1 to instruct the first processing unit PU-1 not to transmit further payload data to the second processing unit PU-2 until a Xon information is sent because the data buffer of the second processing unit PU-2 gets empty. When the Xoff signaling information is received at the MAC processing layer subunit I-MAC-1 of the first processing unit PU-1, the credit generator of the structured cell interface IL-1 may not provide further credits CD to the scheduler subunit S. Only those data queues Q-1, Q-2, Q-3 are allowed to still forward payload data for example via the scheduler subunit S to the structured cell interface IL-1 which have been decided by the scheduler subunit S based on previously credits CD.

In a same way, the second processing unit PU-2 also contains a structured cell interface IL-2. The structured cell interface IL-2 may be preferably also an Interlaken interface. The structured cell interface IL-2 may be configurable with the number N of PCSs IL2P1, IL2P2, IL2P3, ..., IL2PN which are able to provide the number N of the SerDes lanes LN-1, LN-2, LN-3, ..., LN-N. The PCSs IL2P1, IL2P2, IL2P3, ..., IL2PN allow to apply for each of the SerDes lanes LN-1, LN-2, LN-3, ..., LN-N an individual dedicated decoding which corresponds to an individual dedicated encoding being performed by the first processing unit PU-1 for each one of the SerDes lanes LN-1, LN-2, LN-3, ..., LN-N.

The second internal connection ICON-2 between the structured cell interface IL-1 of the first processing unit PU-1 and the structured cell interface IL-2 of the second processing unit PU-2 is used to transfer the payload data from the first processing unit PU-1 to the second processing unit PU-2 via the number N of the SerDes lanes LN-1, LN-2, LN-3, ..., LN-N and is further used for transmitting flow control information FC2 for the flow control which may be equal or similar to the flow control information FC which is applied between the structured cell interface IL-1 and the scheduler subunit S. The Interlaken protocol allows communicating per-channel backpressure by providing two options: an out-of-band flow control interface and an in-band channel. Further details of the flow control mechanism are described in the Interlaken protocol definition and are not described in the following for simplification.

In alternative embodiments, any other protocol as applied for the structured cell interface IL-1 may be also applied for the structured cell interface IL-1.

The second processing unit PU-2 further contains a mapping subunit IL-TO-ODU-MAP which is configured to determine byte positions of so-called Interlaken cells within the OPUk payload section PS-OPU and writes the payload data of the Interlaken cells to the byte positions each time when a transmission frame using the OTN frame format FS-OTU is generated.

The second processing unit PU-2 may further contain a OPUk frame processing subunit OPU-P which is configured to map signals of variable bit rate into OPUk containers of variable size by putting a corresponding amount of payload data to the OPUk payload section PS-OPU and overhead data to the OPUk overhead OPU-OH. The OPUk frame processing subunit OPU-P may be further configured to map constant bit rate signals into OPUk containers of constant size in a common manner according to the ITU-T G.709 standard for having a backward compatibility.

The second processing unit PU-2 further contains a ODUk frame processing subunit ODU-P which is configured to add the ODUk overhead ODU-OH to the OPUk containers of variable size.

The second processing unit PU-2 further contains a OTUk frame processing subunit OTU-P which is configured to add the frame alignment overhead FAS-OH and the OTUk overhead OTU-OH to the OPUk containers of variable size.

The second processing unit PU-2 further contains a FEC processing subunit FEC-P which is configured to generate the FEC data based on the payload data of the OPUk payload section PS-OPU according to FEC schemes known to skilled persons in the art and as specified for example in ITU-T standards ITU.-T G.709 or ITU-T G.795.1 Appendix I and to put the generated FEC data to the OTUk FEC section FEC-OH of variable size for having finally the OTN frame format FS-OTU.

The second processing unit PU-2 is further configured to output transmission signals TS having the OTN frame format FS-OTU via the first internal connection ICON-1.

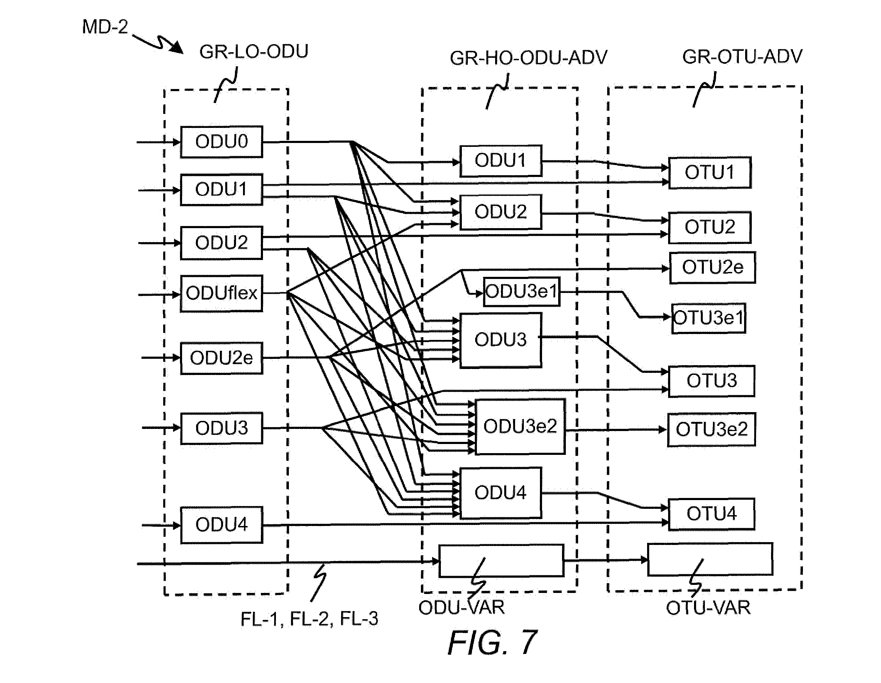

Figure 7 shows schematically an enhanced mapping diagram MD-2 between optical channel data units and optical channel transport units which may be implemented in the second processing unit PU-2. The enhanced mapping diagram MD-2 may contain all mappings of the mapping diagram MD-1 which is shown in Figure 2 for providing a backward compatibility. The enhanced mapping diagram MD-2 further contains a mapping of the payload data flows FL-1, FL-2, FL-3 to a further high order ODU ODU-VAR of a further second group GR-HO-ODU-ADV of high order ODUs. The further second group GR-HO-ODU-ADV of high order ODUs may contain all high order ODUs of the second group GR-HO-ODU of high order ODUs as shown in Figure 2 and the further high order ODU ODU-VA. The further high order ODU ODU-VAR is also shown in Figure 5 by a dashed line. The enhanced mapping diagram MD-2 further contains a mapping of the further high order ODU ODU-VAR to a further OTU OTU-VAR of a further third group GR-OTU-ADV of OTUs. The further third group GR-HO-OTU-2 of OTUs may contain all OTUs of the third group GR-HO-OTU of OTUs as shown in Figure 2 and the further OTU OTU-VAR. The further OTU OTU-VAR is also shown in Figure 5 by a dotted line.

Figure 8 a) to Figure 8 c) show schematically a flow diagram of an exemplarily method MET for maximizing the payload data rate on the communication link CL. The method MET may be executed partly or totally by the control unit CU. In further alternatives, some of the steps of the method MET may be executed for example by the second processing unit PU-2.

The method MET contains a first step S1 of determining the initial transmission capacity or in other words an initial overall data rate for the communication link CL. The determination of the initial transmission capacity/overall data rate may be triggered if the line card LC has been connected to the communication link CL for a first time or if the line card LC has been reconnected to the communication link CL after an outage time or after a maintenance operation or if a routing path of the communication link CL has been changed. When the routing path of the communication link CL has been changed the transmission length of the communication link CL and/or the number of intermediate optical power amplifiers used along the communication link CL and/or the number of ROADMs used along the communication link may have changed.

The determining step S1 may contain a first optionally sub-step S1-1 of monitoring the operation parameter information OP-INFO of one or several operating parameter(s) of at least one device operating the communication link CL such as the bias current of the laser diode which is described above in more detail with respect to the Figure 4.

The determining step S1 may contain a second optionally sub-step S1-2 of monitoring the characteristic parameter information CP-INFO of one or several characteristic parameter(s) of the communication link CL such as the transmission length of the communication link CL, the number of intermediate optical power amplifiers used along the communication link CL, etc.

The determining step S1 may contain a third optionally sub-step S1-3 of selecting the initial transmission capacity from the pre-configured mapping table by using the operation parameter information OP-INFO of one or several operating parameter(s) and/or by using the characteristic parameter information CP-INFO of one or several characteristic parameter(s) as selection parameter.

In a further optionally step S2, the control unit CU may negotiate the selected or calculated initial transmission capacity with the counterpart line card as described above with respect to Figure 4.

In a next optional step S3, the control unit CU may determine the initial payload line rate and the initial FEC line rate as described above in more detail with respect to Figure 4. A next step after the step S3 may be step S4.

In an alternative embodiment, the initialization of the line card LC may be executed by a step S3-1 instead of the steps S1 to S3. In such a case no operation parameter information OP-INFO of the one or several operating parameter(s) and no characteristic parameter information CP-INFO of the one or several characteristic parameter(s) of the communication link CL may be applied. Instead of that, the line card LC and the counterpart line card may automatically start with a same preconfigured initial transmission capacity/overall line rate which may be split already in a preconfigured initial payload data rate and a preconfigured initial FEC data rate. In such a case, the negotiating step S2 can be avoided and no signaling messages need to be exchanged. A next step after the step S3-1 may be the step S4.

By the further step S4, the line card LC is operated and controlled for applying the initial payload line rate and the initial FEC line rate for the generation of transmission signals TS having the OTN frame format FS-OTU. For that purpose, the control unit CU may provide the one or several control parameter(s) CP such as the information about the initial payload line rate and the initial FEC line rate to the second processing unit PU-2. The information about the initial payload line rate and the initial FEC line rate may be for example the parameters X and Y as described above in more detail with respect to Figure 5.

The control unit CU may further provide the payload backpressure information and/or the number of CBR signals to the second processing unit PU-2. The payload back pressure information and/or the number of CBR signals will be used for example by the structured cell interfaces IL-1, IL-2 for the flow control so that the scheduler subunit S provides only that amount of payload data to the structured cell interfaces IL-1 which can be mapped to the current size of the OPUk payload section PS-OPU of the OTN frame format FS-OTU.

In a next step S5, the control unit CU verifies whether further operation parameter information OP-INFO of at least one operating parameter of at least one device operating the communication link CL and/or further characteristic parameter information CP-INFO of at least one characteristic parameter of the communication link CL has been provided to the control unit CU.

If the control unit CU has obtained any further operation parameter information OP-INFO and/or any further characteristic parameter information CP-INFO step S6 may be a next step. If else no further operation parameter information OP-INFO or no further characteristic parameter information CP-INFO has been provided to the control unit CU, step S9 may be a subsequent step.

By the next step S6, the control unit CU determines a further transmission capacity/overall data rate based on the further operation parameter information OP-INFO and/or the further characteristic parameter information CP-INFO. For this purpose, the control unit CU selects the further transmission capacity/overall line rate from the pre-configured mapping table by using the further operation parameter information OP-INFO and/or the further characteristic parameter information CP-INFO.

In a next step S7, the control unit CU may verify whether for example an absolute value of a difference between the further transmission capacity/overall data rate and the currently applied transmission capacity/overall data rate exceeds a predefined difference hysteresis value or is outside a predefined difference hysteresis range. By using the predefined hysteresis value or the predefined difference hysteresis range an execution of following step S8 and unnecessary signaling messages can be avoided if the difference between the further transmission capacity/overall data rate and the currently applied transmission capacity/overall data rate is too small.

If the absolute value of the difference between the further transmission capacity/overall data rate and the currently applied transmission capacity/overall data rate exceeds the predefined difference hysteresis value or is outside the predefined difference hysteresis range, the step S8 will be executed next otherwise step S9 may be a subsequent step.

Similar to the step S2, by the step S8 the control unit CU may negotiate the further initial transmission capacity/overall data rate with the counterpart line card as described above with respect to Figure 4.

In the further step S9, the control unit CU verifies whether the error information E-INFO about transmission errors from the FEC counter and/or of the bit error counter has been provided to the control unit CU.

If the control unit CU has obtained the error information E-INFO step S10 may be a next step. If else the error information E-INFO has not been provided to the control unit CU, the step S5 may be repeated again preferably after a timer has been lapsed.

By the further step S10, the OTN frame format FS-OTU of future transmission signals TS as shown in Figure 5 is adapted preferably based on a negotiated transmission capacity/overall data rate by controlling the size of the OPUk payload section PS-OPU of the OTN frame format FS-OTU and the size of the forward error correction section FEC-OH of the OTN frame format FS-OTU.

The further step S10 is executed according to predefined optimization goals which can be predefined by network operators and which may differ from a first network operator to a second network operator.

In a first sub-step S10-1, the control unit CU may verify, whether for example an absolute value of a difference between a currently reported transmission error rate and a previously reported transmission error rate is above a predefined error hysteresis value or is outside a predefined error hysteresis range.

If the absolute value of the difference between the currently reported transmission error rate and the previously reported transmission error rate is below or equal to the predefined error hysteresis value or is inside the predefined error hysteresis range, the step S5 may be repeated again preferably after a timer has been lapsed. If else the absolute value of the difference between the currently reported transmission error rate and the previously reported transmission error rate is above the predefined error hysteresis value or is outside the predefined error hysteresis range, sub-step S10-2 may be a subsequent sub-step.

By the subsequent sub-step S10-2, the control unit CU may verify, whether the currently reported transmission error rate is below a predefined transmission error rate.

If the currently reported transmission error rate is below the predefined transmission error rate, sub-steps S10-3-1 or S10-3-2 may be subsequent sub-steps. If else the currently reported transmission error rate is equal to or above the predefined transmission error rate, sub-steps S10-3-3, S10-3-4 or S10-3-5 may be subsequent sub-steps.

The sub-steps S10-3-1, S10-3-2, S10-3-3, S10-3-4 and S10-3-5 may belong to a sub-step S10-3 for determining a further payload data rate and/or a further FEC data rate.

Using the sub-step S10-3-1, the size of the OPUk payload section PS-OPU of the OTN frame format FS-OTU may be increased with a first predefined increase amount and at the same time the size of the FEC section FEC-OH may be decreased by the first predefined increase amount. This means that the payload data rate is increased and the FEC data rate is decreased by keeping the current overall data rate constant. A further sub-step after the sub-step S10-3-1 may be sub-step S10-5.

Alternatively by using the sub-step S10-3-2, the size of the OPUk payload section PS-OPU of the OTN frame format FS-OTU may be increased with a second predefined increase amount by increasing the current transmission capacity/overall data rate with the second predefined increase amount. This means that the payload data rate and the overall data rate are increased and the FEC data rate is kept constant. In a further sub-step S10-4, the increased transmission capacity/overall data rate is negotiated with the counterpart line card in a same way as described above with respect to the step S2. A further sub-step after the sub-step S10-4 may be the sub-step S10-5.

The sub-step S10-3-2 may be preferably applied in first cycles of the method MET when the initial payload data rate and the initial FEC data rate has been determined in the step S3. Then, in second cycles of the method MET the sub-step S10-3-1 may be executed for further maximizing the payload data rate.

Using the sub-step S10-3-3, the size of the FEC section FEC-OH of the OTN frame format FS-OTU may be increased with a third predefined increase amount and at the same time the size of the OPUk payload section PS-OPU may be decreased by the third predefined increase amount. This means that the FEC data rate is increased and the payload data rate is decreased by keeping the current transmission capacity/overall data rate constant. A further sub-step after the sub-step S10-3-3 may be the sub-step S10-5.

Alternatively by using the sub-step S10-3-4, the size of the FEC section FEC-OH of the OTN frame format FS-OTU may be increased with a fourth predefined increase amount by increasing the current transmission capacity/overall data rate with the fourth predefined increase amount. This means that the FEC data rate and the overall data rate are increased and the payload data rate is kept constant. The sub-step S10-5 may be executed after the sub-step S10-3-4.

In a further alternative by using the sub-step S10-3-5, the size of the OPUk payload section PS-OPU of the OTN frame format FS-OTU may be decreased with a predefined decrease amount by decreasing the current transmission capacity/overall data rate with the predefined decrease amount. This means that the payload data rate and the overall data rate are decreased and the FEC data rate is kept constant. The sub-step S10-5 may be executed after the sub-step S10-3-5.

The sub-step S10-3-4 may be preferably applied in further first cycles of the method MET when the currently reported transmission error rate exceeds the predefined transmission error rate and the current transmission capacity/overall data rate can be further increased. If the predefined transmission error rate and the transmission capacity/overall data rate cannot be further increased, in further second cycles of the method MET the sub-step S10-3-3 or the sub-step S10-3-5 may be executed.

By the sub-step S10-5, the line card LC is operated and controlled for applying the further payload data rate and/or the further FEC data rate for the generation of next transmission signals TS using the adapted OTN frame format FS-OTU. After the sub-step S10-5, the step S5 may be repeated again preferably after a further timer has been lapsed.

In a preferred embodiment, the method MET may be executed for the downstream direction towards the counterpart line card and a further method may be executed at the counterpart line card for the upstream direction. This means, that the determining steps S1, S3, S6, S10-3 determine the current transmission capacity/overall data rate, the payload data rate and/or the FEC data rate independently for both opposite directions of the communication link CL and the adapting step S10 adapts the OTN frame format FS-OTU also independently for the downstream direction and the upstream direction.

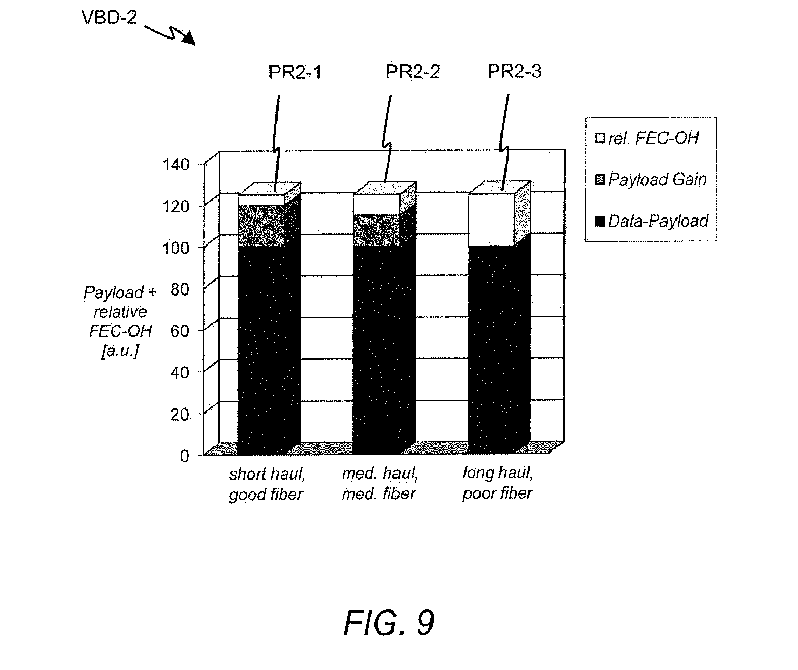

Figure 9 shows schematically a vertical bar diagram VBD-2 for a variable payload data rate and a variable FEC data rate both in arbitrary units with respect to different characteristics of the optical communication link CL similar to those which has shown in Figure 1 and which has been described with respect to Figure 1. When using well-known methods and processing modules for pre-configuring and applying a payload data rate and a FEC data rate, the payload data rate would be pre-configured for the worst case meaning a longest usable length of the transmission path of the communication link CL and a worst usable quality of optical fibers of the communication link CL which is shown by a black section of pillar PR2-3.

When using the characteristic parameter information CP-INFO that a current length of the transmission path of the communication link CL is shorter than the longest usable length of the transmission path of the communication link CL such as so-called medium haul with a length of the transmission path between the first predefined length and a second predefined length (see pillar PR2-2 and description with respect to Figure 1) or a so-called short haul with a length of the transmission path below the first predefined length (see pillar PR2-1 and description with respect to Figure 1) smaller FEC data rates can be applied for obtaining a same predefined error rate. Freed resources not required for the FEC data rate can be used to increase the payload data rate which is indicated in Figure 9 by the term "payload gain" and grey sections of the pillars PR2-1, PR2-2. This means that the payload data rate and the FEC data rate or the share between the payload data rate and the FEC data rate can be continuously adjusted to a reconfiguration of a transmission path or routing path of the communication link CL having for example the short haul with a first overall optical fiber attenuation during a first operation time period and the long haul with a second overall optical fiber attenuation larger than the first overall optical fiber attenuation during a second operation time after or before the first operation time period.

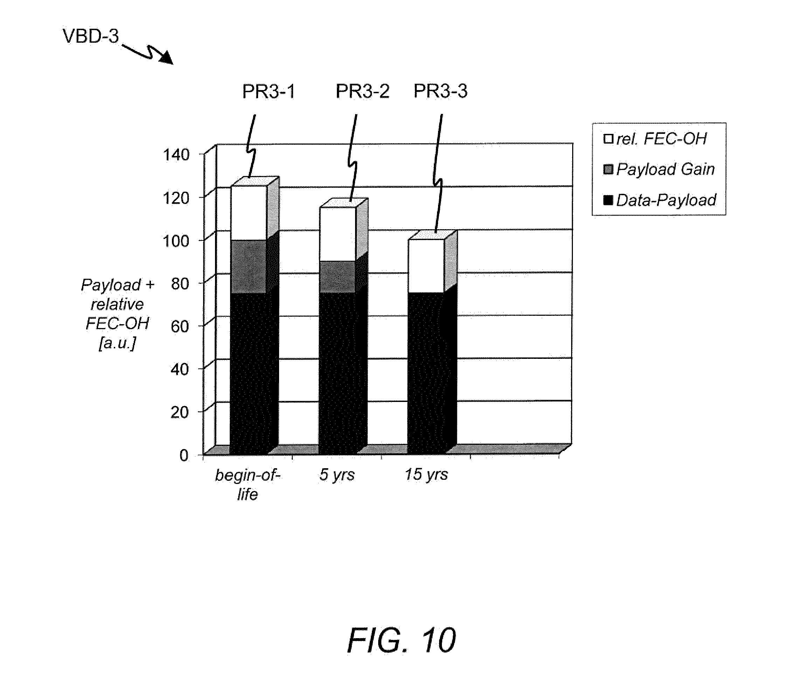

Figure 10 shows schematically a further vertical bar diagram VBD-3 for a variable payload data rate and a fixed FEC data rate both in arbitrary units with respect to ageing effects of the optical communication link CL similar to those which has shown in Figure 1 and which has been described with respect to Figure 1. When using well-known methods and processing modules for pre-configuring and utilizing a payload data rate and a FEC data rate, the payload data rate would be pre-configured for the worst case meaning a longest usable period of use of optical fibers of the communication link CL such as 15 years which is shown by a black section of pillar PR3-3.

When using the characteristic parameter information CP-INFO that the attenuation of the optical fibers is rather small at begin of lifetime (see pillar PR3-1) or after a service life of 5 years the attenuation of the optical fibers has been increased slightly in comparison to begin-of-lifetime but not as much as after the longest usable period of use (see pillar PR3-2) a remaining not used part of the transmission capacity can be applied for increasing the payload line rate which is also indicated in Figure 10 by the term "payload gain" and a grey section of pillars PR3-1, PR3-2. This means that the payload data rate or the share between the payload data rate and the FEC data rate can be continuously adjusted during lifetime of components such as optical fibers of the communication link CL.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for transmitting", "means for receiving", "means for determining" etc. (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that the method MET disclosed in the specification or in the claims may be implemented by a device having means for performing each of the respective steps of these methods. Preferably, a computer program product may contain computer-executable instructions for performing one of the method MET, when the computer program product is executed on at least one programmable hardware device such as a DSP, an ASIC or an FPGA. Preferably, a digital data storage device may encode a machine-executable program of instructions to perform one of the method MET.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. A method (MET) for maximizing a payload data rate on a communication link (CL) comprising:

   - determining (S6) a current transmission capacity of said communication link (CL) based on state information (CP-INFO, OP-INFO, E-INFO) about at least one current operating condition of said communication link (CL), and
   - adapting (S10) based on said current transmission capacity said payload data rate and a forward error correction data rate for payload data of said payload data rate by maximizing said payload data rate.

2. The method (MET) according to claim 1, wherein said maximizing of said payload data rate comprises increasing said payload data rate until an error data rate exceeds a predefined error data rate and until said payload data rate and said forward error correction data rate completely utilizes said current transmission capacity.

3. The method (MET) according to any of the preceding claims, wherein said adapting (S10) adapts a frame format (FS-OTU) of at least one data transport signal of said communication link (CL) by controlling a size of a payload section (PS-OPU) of said frame format (FS-OTU) for being filled by said payload data and a size of a forward error correction section (FEC-OH) of said frame format (FS-OTU) for being filled by forward error correction data of said forward error correction data rate.

4. Method (MET) according to any of the preceding claims, wherein said determining (S6) determines said current transmission capacity independently for opposite directions of transmission of said communication link (CL) and wherein said adapting (S10) adapts said payload data rate and said forward error correction data rate independently for said opposite directions of transmission of said communication link (CL).

5. Method (MET) according to any of the preceding claims, wherein said method (MET) further comprises determining (S1) an initial transmission capacity based on said state information (CP-INFO, OP-INFO) about said at least one current operating condition of said communication link (CL) or utilizing (S3-1) a preconfigured initial transmission capacity.

6. Method (MET) according to claim 5, wherein said method (MET) further comprises determining (S3) an initial payload data rate and an initial forward error correction data rate based on said determined initial transmission capacity or utilizing (S3-1) a preconfigured initial payload data rate and a preconfigured initial forward error correction data rate and wherein said determined initial forward error correction data rate or said preconfigured initial forward error correction data rate utilizes a most robust forward error correction coding.

7. Method (MET) according to claim 5 or claim 6, wherein said method (MET) further comprises negotiating (S2) said initial transmission capacity with a network node (NN1, NN2) at an opposite end of said communication link (CL).

8. Method (MET) according to any of the preceding claims, wherein said adapting (S1) adapts said payload data rate with incremental steps of a smallest utilizable channel data unit or adapts said payload data rate continuously without said incremental steps.

9.  Method (MET) according to any of the preceding claims, wherein said state information (CP-INFO, OP-INFO) about said at least one current operating condition of said communication link (CL) is state information (OP-INFO) about at least one operating parameter of at least one device (Rx/Tx) generating transmission signals for said communication link (CL) or is state information (CP-INFO) about at least one characteristic parameter of said communication link (CL) affecting a signal quality on said communication link (CL).

10. Method (MET) according to any of the preceding claims, wherein said adapting (S10) comprises verifying (S10-1) whether a transmission error rate exceeds a hysteresis value or is outside a hysteresis range and wherein said adapting (S10) is executed when said transmission error rate has exceeded said hysteresis value or is outside said hysteresis range.

11. Method (MET) according to any of the preceding claims, wherein said adapting (S10) comprises:

    - verifying (S10-2) whether a transmission of said payload data provides a current error data rate equal to or below a predefined error data rate,
    wherein said adapting (S10) further comprises one of the following sub-steps when said current error data rate is below or equal to said predefined error rate:
    - increasing (S10-3-1) said payload data rate by a first predefined amount and decreasing said forward error correction data rate by said first predefined amount without changing an overall data rate comprising said payload data rate and said forward error correction data rate;
    - increasing (S10-3-2) said payload data rate by a second predefined amount by increasing said overall data rate by said second predefined amount without changing said forward error correction data rate;
    wherein said adapting (S10) further comprises one of the following sub-steps when said current error data rate is above said predefined error data rate:
    - increasing (S10-3-3) said forward error correction data rate by a third predefined amount and decreasing said payload data rate by said third predefined amount without changing said overall data rate;
    - increasing (S10-3-4) said forward error correction data rate by a fourth predefined amount by increasing said overall data rate by said fourth predefined amount without changing said payload data rate;
    - decreasing (S10-3-5) said payload data rate by a fifth predefined amount by decreasing said overall data rate by said fifth predefined amount without changing said forward error correction data rate.

12. Method (MET) according to any of the preceding claims, wherein said adapting (S10) further comprises operating and controlling (S10-5) a scheduling of said payload data according to said adapted payload data rate via a backpressure mechanism with flow control.

13. A line card (LC) for maximizing a payload data rate on a communication link (CL) comprising a control unit (CU) configured to determine a current transmission capacity of said communication link (CL) based on state information (CP-INFO, OP-INFO, E-INFO) about at least one current operating condition of said communication link (CL) and to adapt based on said current transmission capacity said payload data rate and a forward error correction data rate for payload data of said payload data rate by maximizing said payload data rate.

14. Line card (LC) according claim 13, wherein said line card (LC) further comprises:

    - a first processing unit (PU-1) configured to schedule said payload data based on a backpressure mechanism with flow control for obtaining said adapted payload data rate,
    - a chip-to-chip interface (ICON-2) between said first processing unit (PU-1) and a second processing unit (PU-2) configured to transfer said payload data from said first processing unit (PU-1) to said second processing unit (PU-2) based on said backpressure mechanism with said flow control, and
    - said second processing unit (PU-2) configured to generate at least one data transport signal based on said adapted payload data rate and said adapted forward error correction data rate.

15. Line card (LC) according to claim 13 or claim 14, wherein said line card (LC) is configured to combine at least one data packet traffic flow (FL-1, FL-2) of variable payload data rate with at least one time division multiplexing traffic flow (FL-3) of fixed payload data rate for obtaining said adapted payload data rate.

*FIG. 1*

*FIG. 2*

EP 3 076 617 A1

*FIG. 3*

EP 3 076 617 A1

*FIG. 4*

FS-OTU

FAS-OH   OTU-OH   PS-OPU

*1*   *7 8*   *14 15 16  17*   *17+X 17+X+1  17+X+1+Y*

Framing

ODU-OH

BIP8-OH

PM-OH

RES

Payload

FEC-OH

OPU-OH

ODU-VAR

OTU-VAR

*FIG. 5*

EP 3 076 617 A1

*FIG. 6*

MD-2

GR-LO-ODU  GR-HO-ODU-ADV  GR-OTU-ADV

ODU0

ODU1

ODU2

ODUflex

ODU2e

ODU3

ODU4

ODU1

ODU2

ODU3e1

ODU3

ODU3e2

ODU4

OTU1

OTU2

OTU2e

OTU3e1

OTU3

OTU3e2

OTU4

FL-1, FL-2, FL-3

ODU-VAR

OTU-VAR

*FIG. 7*

MET

```
                                    ┌──────────┐
                                    │  START   │──────────────────────┐
                                    └──────────┘                      │
                                          │                           │
S1    ┌───────────────────────────────────▼────────────────────────┐ │
      │   Determining initial transmission capacity/overall line rate │ │
S1-1  │   ┌──────────────────────────────────────────────────────┐ │ │
      │   │ Monitoring state information of at least one operating parameter │ │ │
      │   └──────────────────────────────────────────────────────┘ │ │
S1-2  │   ┌──────────────────────────────────────────────────────┐ │ │
      │   │ Monitoring state information of characteristic parameter of communication link │ │ │
      │   └──────────────────────────────────────────────────────┘ │ │
S1-3  │   ┌──────────────────────────────────────────────────────┐ │ │
      │   │ Selecting/calculating intial transmission capacity/overall line rate │ │ │
      │   └──────────────────────────────────────────────────────┘ │ │
      └───────────────────────────────┬──────────────────────────┘ │
                                       │                             │
S2    ┌────────────────────────────────▼───────────────────────────┐ │
      │ Negotiating initial transmission capacity/overall line rate with counterpart line card │ │
      └────────────────────────────────┬───────────────────────────┘ │
                                       │                             │
S3    ┌────────────────────────────────▼───────────────────────────┐ │
      │ Determining initial payload line rate and initial FEC line rate │ │
      └──┬─────────────────────────────────────────────────────────┘ │
         │                                                            │
      ┌──▼─────────────────────────────────────────────────────────┐◄┘
      │ Applying preconfigured initial overall line rate/initial payload line rate/initial FEC line rate │  S3-1
      └──┬─────────────────────────────────────────────────────────┘
         │                             │
      ┌──▼─────────────────────────────▼──────────────────────────┐
      │ Operating and contolling line card with initial payload line rate and initial FEC line rate │
      └────────────────────────────────┬──────────────────────────┘
            S4                          │
                                        ▼
                                  to step S5
```

*FIG. 8 a)*

EP 3 076 617 A1

MET

from step S4

S5 — Further state information OP-INFO and/or furhter state information CP-INFO of communication link obtained?

N

Y

S6 — Determining further transmission capacity/overall line rate

S7 — N Above difference hysteresis value?

Y

S8 — Negotiating further transmission capacity/overall line rate with counterpart line card

S9 — State information of at least one transmission error parameter obtained?

N

Y
to step S10

FIG. 8 b)

FIG. 8c)

FIG. 9

EP 3 076 617 A1

*FIG. 10*

EP 3 076 617 A1

Europäisches
Patentamt

European
Patent Office

Office européen
des brevets

# EUROPEAN SEARCH REPORT

Application Number

EP 15 16 4051

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 970 920 B1 (DINAN ESMAIL [US]) 28 June 2011 (2011-06-28) | 1,2,4-9, 11-13 | INV. H04L12/825 H04L1/00 |
| Y | * column 10, line 50 - column 11, line 43 * ----- | 3,10,14, 15 | |
| Y | US 2014/122978 A1 (KUBO KAZUO [JP]) 1 May 2014 (2014-05-01) | 3,14,15 | |
| A | * paragraph [0038] - paragraph [0040] * ----- | 1,2,4-13 | |
| X | WO 2009/020529 A2 (LUCENT TECHNOLOGIES INC [US]; DE LIND VAN WIJNGAARDEN ADRIAA [US]; GIL) 12 February 2009 (2009-02-12) * page 10, line 11 - page 11, line 22; figure 3 * ----- | 1-15 | |
| Y | WO 2013/145650 A1 (NEC CORP [JP]; TANAKA AKIHIRO [JP]; TAJIMA AKIO [JP]) 3 October 2013 (2013-10-03) * the whole document * ----- | 10 | |
| A | KAMETANI S ET AL: "A study of rate-adaptive forward error correction in OTU framing", 2013 18TH OPTOELECTRONICS AND COMMUNICATIONS CONFERENCE HELD JOINTLY WITH 2013 INTERNATIONAL CONFERENCE ON PHOTONICS IN SWITCHING (OECC/PS), IEICE, 30 June 2013 (2013-06-30), pages 1-2, XP032482475, [retrieved on 2013-09-12] * the whole document * ----- | 1-15 | TECHNICAL FIELDS SEARCHED (IPC) H04L |

The present search report has been drawn up for all claims

| Place of search | Date of completion of the search | Examiner |
|---|---|---|
| The Hague | 11 August 2016 | Perrier, Samuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 16 4051

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2016

| Patent document cited in search report | | | Publication date | Patent family member(s) | | | Publication date |
|---|---|---|---|---|---|---|---|
| US 7970920 | B1 | | 28-06-2011 | NONE | | | |
| US 2014122978 | A1 | | 01-05-2014 | CN | 103650398 | A | 19-03-2014 |
| | | | | EP | 2790343 | A1 | 15-10-2014 |
| | | | | JP | 5687362 | B2 | 18-03-2015 |
| | | | | JP | WO2013084341 | A1 | 27-04-2015 |
| | | | | US | 2014122978 | A1 | 01-05-2014 |
| | | | | WO | 2013084341 | A1 | 13-06-2013 |
| WO 2009020529 | A2 | | 12-02-2009 | CN | 101796757 | A | 04-08-2010 |
| | | | | CN | 104852782 | A | 19-08-2015 |
| | | | | EP | 2186239 | A2 | 19-05-2010 |
| | | | | EP | 3048749 | A1 | 27-07-2016 |
| | | | | JP | 2010536240 | A | 25-11-2010 |
| | | | | KR | 20100054790 | A | 25-05-2010 |
| | | | | US | 2009044079 | A1 | 12-02-2009 |
| | | | | WO | 2009020529 | A2 | 12-02-2009 |
| WO 2013145650 | A1 | | 03-10-2013 | NONE | | | |

EPO FORM P0459

For more details about this annex : see Official Journal of the European Patent Office, No. 12/82